# EUROPEAN PATENT APPLICATION

(11) **EP 2 679 594 A1**
(43) Date of publication of application: **01.01.2014**
(21) Application number: 12173442.0
(22) Date of filing: 25.06.2012
(51) Int. Cl.: C07F 17/00, C08F 4/64

(54) **Metallocene compound, catalyst composition including the same, and olefin polymerization process using the same**

(71) Applicant: Daelim Industrial Co., Ltd., Seoul 110-732 (KR)
(72) Inventor: Hong, Sah-Mun, 305-720 Daejeon (KR); Choi, Hye-Sun, 135-935 Seoul (KR); Sohn, Byung-Keel, 305-720 Daejeon (KR)
(74) Representative: Ter Meer Steinmeister & Partner

(57) **Abstract**

A metallocene compound which can polymerize olefin polymer or copolymer with high polymerization activity, and catalyst composition including the same, and olefin polymerization process using the same are disclosed. The metallocene compound is represented by the following formula,

(4HInd)(Cp')MX₂

wherein, 4HInd is a group having tetrahydroindenyl nucleus, Cp' is a group having cyclopentadienyl nucleus, and 4HInd and Cp' are unsubstituted or substituted by one or more substituents, and the substituents are same or different from each other, and are radicals selected from the group consisting of an alkyl, alkoxy, alkylsilyl, alkylsiloxy, alkylamino or haloalkyl group of 1 to 20 carbon atoms, a cycloalkyl group of 3 to 20 carbon atoms, an aryl, arylalkyl, arylsilyl, alkylaryl or aryloxy group of 6 to 20 carbon atoms, a dialkylamino group of 2 to 20 carbon atoms, a halogen atom, and an amino group, and M is a Group IV, V or VI transition metal of the Periodic Table, and X is same or different from each other, and is radical selected from the group consisting of a halogen atom, an alkyl or alkoxy group of 1 to 20 carbon atoms, an alkenyl group of 2 to 20 carbon atoms, aryl, alkylaryl, arylalkyl, aryloxy group of 6 to 20 carbon atoms.

## Description

### FIELD OF THE INVENTION

This invention relates to a metallocene compound, and more particularly, to a metallocene compound which can polymerize olefin polymer or copolymer with high polymerization activity, and a catalyst composition including the same, and an olefin polymerization process using the same.

### BACKGROUNDS OF THE INVENTION

Catalysts having a transition metal have been widely used for an olefin polymerization. For example, German Patent Nos. 2,608,933 and 3,007,725 disclose that a metallocene compound having a Group 4B transition metal of periodic table such as zirconium, titanium, hafnium, and cyclopentadienyl ligands can be used as a catalyst for olefin polymerization in the presence of an activator such as methylaluminoxane. Examples of the cyclopentadienyl ligands include substituted or non-substituted cyclopentadienyl, indenyl, fluorenyl and so on. Various metallocene compounds having cyclopentadienyl ligands have been used as the olefin polymerization catalyst. And, it is known that the chemical structures of the metallocene compounds have a significant effect on the suitabilities of the metallocene as the catalysts. For example, the size and the position of a substituent bonded to the cyclopentadienyl ring have a significant effect on activity, stereo-specificity and stability of the catalyst, and the physical properties of a polymer obtained by the catalyst, and so on. Examples of the metallocene compound having zirconium and cyclopentadienyl ligands substituted with hydrocarbyl group include bis (alkylcyclopentadienyl)zirconium dichloride(wherein, the alkyl represents methyl, ethyl, isopropyl, tert-butyl, trimethylsilyl or so on)(J. Chem. Soc. Dalton Trans., 805 (1981)), bis(pentamethylcyclopentadienyl)zirconium dichloride (J. Amer. Chem. Soc., 100, 3078 (1978)), (pentamethylcyclopentadienyl) (cyclopentadienyl)zirconium dichloride (J. Amer. Chem. Soc., 106, 6355 (1984)), bis(di, tri, or tetra alkyl-cyclopentadienyl)zirconium dichloride (U.S. Patent No. 4,874,880) and so on. In addition, a non-crosslinked metallocene compound having substituted indenyl ligands(U.S. Patent No. 5,780,659), a metallocene compound having cyclopentadienyl ligands substituted with mono alkyl substituent(German Patent No. 4,312,270) are known.

Recently, it is known that a catalyst system (composition) including a metallocene compound which consists of substituted cyclopentadienyl ligands and zirconium as the transition metal, and methylaluminoxane has a superior activity in the olefin polymerization(European Patent No. 129,368, U.S. Patent Nos. 4,874,880 and 5,324,800, Makromol. Chem. Rapid Commun., 4, 417 (1983) and so on ). And, it is also known that catalyst systems consisting of a metallocene compound having an alkyl group and/or a halogen atom as a ligand and aluminoxane have high activity in the polymerization of α-olefin, and catalyst systems consisting of a metallocene compound and an organic boron compound also have high activity in the polymerization of α-olefin (Macromolecules 1993, 26, 3239; J, Am, chem. Soc. 1991, 113, 3623).

Moreover, it is known that the catalyst systems including the metallocene compound and the aluminoxane or organic boron compound have the highest activity at the polymerization temperature of 60 to 90°C. However, while the initial activity of the catalyst is high at the high temperature, the catalysts are not stable at the high-temperature and their activities decrease with polymerization time. Therefore, the productivity of polymerization decreases, the properties of the produced polymer are deteriorated, and the produced polymer is not suitable for producing various plastic articles. If the polymerization temperature is decreased, the molecular weight of the produced polymer can be increased, but the catalytic activity decreases so that enough polymerization activity cannot be obtained.

### SUMMARY OF THE INVENTION

The present inventors have prepared a novel metallocene compound having high polymerization activity, and a catalyst system for olefin polymerization including the novel metallocene compound, and also have developed a method for preparing polyolefin with the catalyst system.

Therefore, it is an object of the present invention to provide a metallocene compound for olefin polymerization whose catalytic activity and stability are superior even at the high polymerization temperature. The catalytic activity of the metallocene compound is maintained for a long time, and polymers having preferable properties are produced stably with the metallocene compound.

It is another object of the present invention to provide a metallocene compound for olefin polymerization which has various properties, and can polymerize a polyolefin having superior polymer morphology.

It is also another object of the present invention to provide a metallocene compound for olefin polymerization which can easily control a molecular weight of the produced polymer in an uniform polymerization medium(solution phase) or a non-uniform polymerization medium (gas or slurry phase), and a catalyst composition including the same and an olefin polymerization process using the same.

In order to achieve these and other objects, the present invention provides a metallocene compound for olefin polymerization represented by the following Formula 1,

[Formula 1] (4HInd)(Cp')MX₂

wherein, 4HInd is a group having tetrahydroindenyl nucleus, Cp' is a group having cyclopentadienyl nucleus, and 4HInd and Cp' may be unsubstituted or substituted with one or more substituents. The substituents may be same or different from each other, and are radicals selected from the group consisting of an alkyl, alkoxy, alkylsilyl, alkylsiloxy, alkylamino or haloalkyl group of 1 to 20 carbon atoms, a cycloalkyl group of 3 to 20 carbon atoms, an aryl, arylalkyl, arylsilyl, alkylaryl or aryloxy group of 6 to 20 carbon atoms, a dialkylamino group of 2 to 20 carbon atoms, a halogen atom, and an amino group. M is a Group IV, V or VI transition metal of the Periodic Table. X may be same or different from each other, and is a radical selected from the group consisting of a halogen atom, an alkyl or alkoxy, group of 1 to 20 carbon atoms, an alkenyl group of 2 to 20 carbon atoms, aryl, alkylaryl, arylalkyl aryloxy group of 6 to 20 carbon atoms.

The present invention also provides an olefin polymerization catalyst composition comprising the metallocene compound and an activator, or the metallocene compound and an activator supported with an organic or inorganic carrier. The present invention also provides an olefin polymerization process including the step of polymerizing at least one olefin in the presence of the polymerization catalyst composition.

The catalyst composition of the present invention has high polymerization activity which remains constant unlike the conventional catalysts whose polymerization activity decreases with polymerization time. Therefore, the productivity of the catalyst composition of the present invention is excellent in a commercial polymerization process. Also, by using the various metallocene compounds according to the present invention, olefin polymer or copolymer having various properties can be produced in an uniform phase(solution) or a non-uniform phase(gas or slurry) polymerization process. In addition, the molecular weight, the molecular weight distribution and the composition distribution of the produced olefin polymer or copolymer can be easily controlled with the catalyst composition of the present invention.

### DETAILED DESCRIPTION OF THE INVENTION

A more complete appreciation of the invention, and many of the attendant advantages thereof, will be better appreciated by reference to the following detailed description.

A metallocene compound according to the present invention is a catalyst for olefin polymerization comprising a ligand having tetrahydroindenyl nucleus (4HInd), a ligand having cyclopentadienyl nucleus (Cp') and a transition metal (M) to which the ligands are bonded, and represented by Formula 1.

[Formula 1] (4HInd)(Cp')MX₂

In Formula 1, 4HInd is a group having tetrahydroindenyl nucleus (moiety), for example, a group having 4,5,6,7-tetrahydroindenyl nucleus, and Cp' is a group having cyclopentadienyl nucleus, preferably a group having cyclopentadienyl nucleus such as cyclopentadienyl, indenyl, fluorenyl, azulenyl and so on. The 4HInd and Cp' may be unsubstituted or substituted. In detail, 4HInd may be partially substituted by 1 to 11 substituents, and Cp' may be partially substituted by one or more, for example, 1 to 5 substituents. The substituents may be same or different from each other, and are radicals selected from the group consisting of an alkyl, alkoxy, alkylsilyl, alkylsiloxy, alkylamino or haloalkyl group of 1 to 20 carbon atoms, a cycloalkyl group of 3 to 20 carbon atoms, an aryl, arylalkyl, arylsilyl, alkylaryl or aryloxy group of 6 to 20 carbon atoms, a dialkylamino group of 2 to 20 carbon atoms, a halogen atom, and an amino group. M is a Group IV, V or VI transition metal of the Periodic Table, preferably, one or more transition metals selected from the group consisting of titanium, zirconium and hafnium of Group IV. X may be same or different from each other, and is a radical selected from the group consisting of a halogen atom selected from the group consisting of fluorine, chlorine, bromine, iodine and so on, an alkyl or alkoxy radical of 1 to 20 carbon atoms, an alkenyl radical of 2 to 20 carbon atoms, and an aryl, alkylaryl or aryloxy radical of 6 to 20 carbon atoms.

The metallocene compound represented by Formulas 1 can be used alone or as mixtures of two or more thereof. Non-limiting examples of the metallocene compound include (4,5,6,7-tetrahydroindenyl)(indenyl)titanium dichloride, (4,5,6,7-tetrahydroindenyl)(indenyl)zirconium dichloride, (4,5,6,7-tetrahydroindenyl)(indenyl)hafnium dichloride, (4,5,6,7-tetrahydroindenyl)(indenyl)titanium difluoride, (4,5,6,7-tetrahydroindenyl)(indenyl)zirconium difluoride, (4,5,6,7 -tetrahydroindenyl)(indenyl)hafnium difluoride, (4,5,6,7-tetrahydroindenyl)(indenyl)titanium dibromide, (4,5,6,7-tetrahydroindenyl)(indenyl)zirconium dibromide, (4,5,6,7-tetrahydroindenyl)(indenyl)hafnium dibromide, (4,5,6,7-tetrahydroindenyl)(indenyl)titanium diiodide, (4,5,6,7-tetrahydroindenyl)(indenyl)zirconium diiodide, (4,5,6,7-tetrahydroindenyl)(indenyl)hafnium diiodide, (1-methyl-4,5,6,7-tetrahydroindenyl)(indenyl)titanium dichloride, (1-methyl-4,5,6,7-tetrahydroindenyl)(indenyl)zirconium dichloride, (1-methyl-4,5,6,7-tetrahydroindenyl)(indenyl)hafnium dichloride, (1-methyl-4,5,6,7-tetrahydroindenyl)(indenyl)titanium difluoride, (1-methyl-4,5,6,7-tetrahydroindenyl)(indenyl)zirconium difluoride, (1-methyl-4,5,6,7-tetrahydroindenyl)(indenyl)hafnium difluoride, (1-methyl-4,5,6,7-tetrahydroindenyl)(indenyl)titanium dibromide, (1-methyl-4,5,6,7-tetrahydroindenyl)(indenyl)zirconium dibromide, (1-methyl-4,5,6,7-tetrahydroindenyl)(indenyl)hafnium dibromide, (1-methyl-4,5,6,7-tetrahydroindenyl)(indenyl)titanium diiodide, (1-methyl-4,5,6,7-tetrahydroindenyl)(indenyl)zirconium diiodide, (1-methyl-4,5,6,7-tetrahydroindenyl)(indenyl)hafnium diiodide, (4,5,6,7-tetrahydroindenyl)(1-methylindenyl)titanium dichloride, (4,5,6,7-tetrahydro-indenyl)(1-methylindenyl)zirconium dichloride, (4,5,6,7-tetrahydroindenyl)(1-methylindenyl)hafnium dichloride, (4,5,6,7-tetrahydroindenyl)(1-methylindenyl)titanium difluoride, (4,5,6,7-tetrahydroindenyl)(1-methylindenyl)zirconium difluoride, (4,5,6,7-tetrahydroindenyl)(1-methylindenyl)hafnium difluoride, (4,5,6,7-tetrahydroindenyl)(1-methylindenyl)titanium dibromide, (4,5,6,7-tetrahydroindenyl)(1-methylindenyl)zirconium dibromide, (4,5,6,7-tetrahydroindenyl)(1-methylindenyl)hafnium dibromide, (4,5,6,7-tetrahydroindenyl)(1-methylindenyl)titanium diiodide, (4,5,6,7-tetrahydroindenyl)(1-methylindenyl)zirconium diiodide, (4,5,6,7-tetrahydroindenyl)(1-methylindenyl)hafnium diiodide, (2-methyl-4,5,6,7-tetrahydroindenyl)(indenyl)titanium dichloride, (2-methyl-4,5,6,7-tetrahydroindenyl)(indenyl)zirconium dichloride, (2-methyl-4,5,6,7-tetrahydroindenyl)(indenyl)hafnium dichloride, (2-methyl-4,5,6,7-tetrahydroindenyl)(indenyl)titanium difluoride, (2-methyl-4,5,6,7-tetrahydroindenyl)(indenyl)zirconium difluoride, (2-methyl-4,5,6,7-tetrahydroindenyl)(indenyl)hafnium difluoride, (2-methyl-4,5,6,7-tetrahydroindenyl)(indenyl)titanium dibromide, (2-methyl-4,5,6,7-tetrahydroindenyl)(indenyl)zirconium dibromide, (2-methyl-4,5,6,7-tetrahydroindenyl)(indenyl)hafnium dibromide, (2-methyl-4,5,6,7-tetrahydroindenyl)(indenyl)titanium diiodide, (2-methyl-4,5,6,7-tetrahydroindenyl)(indenyl)zirconium diiodide, (2-methyl-4,5,6,7-tetrahydroindenyl)(indenyl)hafnium diiodide, (4,5,6,7-tetrahydroindenyl)(2-methylindenyl)titanium dichloride, (4,5,6,7-tetrahydroindenyl)(2-methylindenyl)zirconium dichloride, (4,5,6,7-tetrahydroindenyl)(2-methylindenyl)hafnium dichloride, (4,5,6,7-tetrahydroindenyl)(2-methylindenyl)titanium difluoride, (4,5,6,7-tetrahydroindenyl)(2-methylindenyl)zirconium difluoride, (4,5,6,7-tetrahydroindenyl)(2-methylindenyl)hafnium difluoride, (4,5,6,7-tetrahydroindenyl)(2-methylindenyl)titanium dibromide, (4,5,6,7-tetrahydroindenyl)(2-methylindenyl)zirconium dibromide, (4,5,6,7-tetrahydroindenyl)(2-methylindenyl)hafnium dibromide, (4,5,6,7-tetrahydroindenyl)(2-methylindenyl)titanium diiodide, (4,5,6,7-tetrahydroindenyl)(2-methylindenyl)zirconium diiodide, (4,5,6,7-tetrahydroindenyl)(2-methylindenyl)hafnium diiodide, (1-ethyl-4,5,6,7-tetrahydroindenyl)(indenyl)zirconium dichloride, (1-ethyl-4,5,6,7-tetrahydroindenyl)(indenyl)hafnium dichloride, (1-ethyl-4,5,6,7-tetrahydroindenyl)(indenyl)titanium difluoride, (1-ethyl-4, 5,6,7-tetrahydroindenyl)(indenyl)zirconium difluoride, (1-ethyl-4,5,6,7-tetrahydroindenyl)(indenyl)hafnium difluoride, (1-ethyl-4,5,6,7-tetrahydroindenyl)(indenyl)titanium dibrom ide, (1-ethyl-4,5,6,7-tetrahydroindenyl)(indenyl)zirconium dibrom ide, (1-ethyl-4,5,6,7-tetrahydroindenyl)(indenyl)hafnium dibromide, (1-ethyl-4,5,6,7-tetrahydroindenyl)(indenyl)titanium diiodide, (1-ethyl-4,5,6,7-tetrahydroindenyl)(indenyl)zirconium diiodide, (1-ethyl-4,5,6,7-tetrahydroindenyl)(indenyl)hafnium diiodide, (4,5,6,7-tetrahydroindenyl)(1-ethylindenyl)titanium dichloride, (4,5,6,7-tetrahydroindenyl)(1-ethylindenyl)zirconium dichloride, (4,5,6,7-tetrahydroindenyl)(1-ethylindenyl)hafnium dichloride, (4,5,6,7-tetrahydroindenyl)(1-ethylindenyl)titanium difluoride, (4,5,6,7-tetrahydroindenyl)(1-ethylindenyl)zirconium difluoride, (4,5,6,7-tetrahydroindenyl)(1-ethylindenyl)hafnium difluoride, (4,5,6,7-tetrahydroindenyl)(1-ethylindenyl)titanium dibromide, (4,5,6,7-tetrahydroindenyl)(1-ethylindenyl)zirconium dibromide, (4,5,6,7-tetrahydroindenyl)(1-ethylindenyl)hafnium dibromide, (4,5,6,7-tetrahydroindenyl)(1-ethylindenyl)titaniumdiiodide, (4,5,6,7-tetrahydroindenyl)(1-ethylindenyl)zirconium diiodide, (4,5,6,7-tetrahydroindenyl)(1-ethylindenyl)hafnium diiodide, (2-ethyl-4,5,6,7-tetrahydroindenyl)(indenyl)titanium dichloride, (2-ethyl-4,5,6,7-tetrahydroindenyl)(indenyl)zirconium dichloride, (2-ethyl-4,5,6,7-tetrahydroindenyl)(indenyl)hafnium dichloride, (2-ethyl-4,5,6,7-tetrahydroindenyl)(indenyl)titanium difluoride, (2-ethyl-4,5,6,7-tetrahydroindenyl)(indenyl)zirconium difluoride, (2-ethyl-4,5,6,7-tetrahydroindenyl)(indenyl)hafnium difluoride, (2-ethyl-4,5,6,7-tetrahydroindenyl)(indenyl)titanium dibromide, (2-ethyl-4,5,6,7-tetrahydroindenyl)(indenyl)zirconium dibromide, (2-ethyl-4,5,6,7-tetrahydroindenyl)(indenyl)hafnium dibromide, (2-ethyl-4,5,6,7-tetrahydroindenyl)(indenyl)titanium diiodide, (2-ethyl-4,5,6,7-tetrahydroindenyl)(indenyl)zirconium diiodide, (2-ethyl-4,5,6,7-tetrahydroindenyl)(indenyl)hafnium diiodide, (4,5,6,7-tetrahydroindenyl)(2-ethylindenyl)titanium dichloride, (4,5,6,7-tetrahydroindenyl)(2-ethylindenyl)zirconium dichloride, (4,5,6,7-tetrahydroindenyl)(2-ethylindenyl)hafnium dichloride, (4,5,6,7-tetrahydroindenyl)(2-ethylindenyl)titanium difluoride, (4,5,6,7-tetrahydroindenyl)(2-ethylindenyl)zirconium difluoride, (4,5,6,7-tetrahydroindenyl)(2-ethylindenyl)hafnium difluoride, (4,5,6,7-tetrahydroindenyl)(2-ethylindenyl)titanium dibromide, (4,5,6,7-tetrahydroindenyl)(2-ethylindenyl)zirconium dibromide, (4,5,6,7-tetrahydroindenyl)(2-ethylindenyl)hafnium dibromide, (4,5,6,7-tetrahydroindenyl)(2-ethylindenyl)titanium diiodide, (4,5,6,7-tetrahydroindenyl)(2-ethylindenyl)zirconium diiodide, (4,5,6,7-tetrahydroindenyl)(2-ethyfindenyl)hafnium diiodide, (1-propyl-4,5,6,7-tetrahydroindenyl)(indenyl)zirconium dichloride, (1-propyl-4,5,5,7-tetrahydroindenyl)(indenyl)hafnium dichloride, (1-propyl-4,5,6,7-tetrahydroindenyl)(indenyl)titanium difluoride, (1-propyl-4,5,6,7-tetrahydroindenyl)(indenyl)zirconium difluoride, (1-propyl-4,5,6,7-tetrahydroindenyl)(indenyl)hafnium difluoride, (1-propyl-4,5,6,7-tetrahydroindenyl)(indenyl)titanium dibromide, (1-propyl-4,5,6,7-tetrahydroindenyl)(indenyl)zirconium dibromide, (1-propyl-4,5,6,7-tetrahydroindenyl)(indenyl)hafnium dibromide, (1-propyl-4,5,6,7-tetrahydroindenyl)(indenyl)titanium diiodide, (1-propyl-4,5,6,7-tetrahydroindenyl)(indenyl)zirconium diiodide, (1-propyl-4,5,6,7-tetrahydroindenyl)(indenyl)hafnium diiodide, (4,5,6,7-tetrahydroindenyl)(1-propylindenyl)titanium dichloride, (4,5,6,7-tetrahydroindenyl)(1-propylindenyl)zirconium dichloride, (4,5,6,7-tetrahydroindenyl)(1-propylindenyl)hafnium dichloride, (4,5,6,7-tetrahydroindenyl)(1-propylindenyl)titanium difluoride, (4,5,6,7-tetrahydroindenyl)(1-propylindenyl)zirconium difluoride, (4,5,6,7-tetrahydroindenyl)(1-propylindenyl)hafnium difluoride, (4,5,6,7-tetrahydroindenyl)(1-propylindenyl)titanium dibromide, (4,5,6,7-tetrahydroindenyl)(1-propylindenyl)zirconium dibromide, (4,5,6,7-tetrahydroindenyl)(1-propylindenyl)hafnium dibromide, (4,5,6,7-tetrahydroindenyl)(1-propylindenyl)titanium diiodide, (4,5,6,7-tetrahydroindenyl)(1-propylindenyl)zirconium diiodide, (4,5,6,7-tetrahydroindenyl)(1-propylindenyl)hafnium diiodide, (2-propyl-4,5,6,7-tetrahydroindenyl)(indenyl)titanium dichloride, (2-propyl-4,5,6,7-tetrahydroindenyl)(indenyl)zirconium dichloride, (2-propyl-4,5,6,7-tetrahydroindenyl)(indenyl)hafnium dichloride, (2-propyl-4,5,6,7-tetrahydroindenyl)(indenyl)titanium difluoride, (2-propyl-4,5,6,7-tetrahydroindenyl)(indenyl)zirconium difluoride, (2-propyl-4,5,6,7-tetrahydroindenyl)(indenyl)hafnium difluoride, (2-propyl-4,5,6,7-tetrahydroindenyl)(indenyl)titanium dibromide, (2-propyl-4,5,6,7-tetrahydroindenyl)(indenyl)zirconium dibromide, (2-propyl-4,5,6,7-tetrahydroindenyl)(indenyl)hafnium dibromide, (2-propyl-4,5,6,7-fietrahydroindenyl)(indenyl)titanium diiodide, (2-propyl-4,5,6,7-tetrahydroindenyl)(indenyl)zirconium diiodide, (2-propyl-4,5,6,7-tetrahydroindenyl)(indenyl)hafnium diiodide, (4,5,6,7-tetrahydroindenyl)(2-propylindenyl)titanium dichloride, (4,5,6,7-tetrahydroindenyl)(2-propylindenyl)zirconium dichloride, (4,5,6,7-tetrahydroindenyl)(2-propylindenyl)hafnium dichloride, (4,5,6,7-tetranydroindenyl)(2-propylindenyl)titanium difluoride, (4,5,6,7-tetrahydroindenyl)(2-propylindenyl)zirconium difluoride, (4,5,6,7-tetrahydroindenyl)(2-propylindenyl)hafnium difluoride, (4,5,6,7-tetrahydroindenyl)(2-propylindenyl)titanium dibromide, (4,5,6,7-tetrahydroindenyl)(2-propylindenyl)zirconium dibromide, (4,5,6,7-tetrahydroindenyl)(2-propylindenyl)hafnium dibromide, (4,5,6,7-tetrahydroindenyl)(2-propylindenyl)titanium diiodide, (4,5,6,7-tetrahydroindenyl)(2-propylindenyl)zirconium diiodide, (4,5,6,7-tetrahydroindenyl)(2-propylindenyl)hafnium diiodide, (1-isopropyl-4,5,6,7-tetrahydroindenyl)(indenyl)zirconium dichloride, (1-isopropyl-4,5,6,7-tetrahydroindenyl)(indenyl)hafnium dichloride, (1-isopropyl-4,5,6,7-tetrahydroindenyl)(indenyl)titanium difluoride, (1-isopropyl-4,5,6,7-tetrahydroindenyl)(indenyl)zirconium difluoride, (1-isopropyl-4,5,6,7-tetrahydroindenyl)(indenyl)hafnium difluoride, (1-isopropyl-4,5,6,7-tetrahydroindenyl)(indenyl)titanium dibromide, (1-isopropy)-4,5,6,7-tetrahydroindenyl)(indenyl)zirconium dibromide, (1-isoprapyl-4,5,6,7-tetrahydroindenyl)(indenyl)hafnium dibromide, (1-isopropyl-4,5,6,7-tetrahydroindenyl)(indenyl)titanium diiodide, (1-isopropyl-4,5,6,7-tetrahydroindenyl)(indenyl)zirconium diiodide, (1-isopropyl-4,5,6,7-tetrahydroindenyl)(indenyl)hafnium diiodide, (4,5,6,7-tetrahydroindenyl)(1-isopropylindenyl)titanium dichloride, (4,5,6,7-tetrahydroindenyl)(1-isopropylindenyl)zirconium dichloride, (4,5,6,7-tetrahydroindenyl)(1-isopropylindenyl)hafnium dichloride, (4,5,6,7-tetrahydroindenyl)(1-isopropy)indenyl)titanium difluoride, (4,5,6,7-tetrahydroindenyl)(1-isopropylindenyl)zirconium difluoride, (4,5,6,7-tetrahydroindenyl)(1-isopropylindenyl)hafnium difluoride, (4,5,6,7-tetrahydroindenyl)(1-isopropylindenyl)titanium dibromide, (4,5,6,7-tetrahydroindenyl)(1-isopropylindenyl)zirconium dibromide, (4,5,6,7-tetrahydroindenyl)(1-isopropylindenyl)hafnium dibromide, (4,5,6,7-tetrahydroindenyl)(1-isopropylindenyl)titanium diiodide, (4,5,6,7-tetrahydroindenyl)(1-isopropylindenyl)zirconium diiodide, (4,5,6,7-tetrahydroindenyl)(1-isopropylindenyl)hafnium diiodide, (2-isopropyl-4,5,6,7-tetrahydroindenyl)(indenyl)titanium dichloride, (2-isopropyl-4,5,6,7-tetrahydroindenyl)(indenyl)zirconium dichloride, (2-isopropyl-4,5,6,7-tetrahydroindenyl)(indenyl)hafnium dichloride, (2-isopropyl-4,5,6,7-tetrahydroindenyl)(indenyl)titanium difluoride, (2-isopropyl-4,5,6,7-tetrahydroindenyl)(indenyl)zirconium difluoride, (2-isopropyl-4,5,6,7-tetrahydroindenyl)(indenyl)hafnium difluoride, (2-isopropyl-4,5,6,7-tetrahydroindenyl)(indenyl)titanium dibromide, (2-isopropyl-4,5,6,7-tetrahydroindenyl)(indenyl)zirconium dibromide, (2-isopropyl-4,5,6,7-tetrahydroindenyl)(indenyl)hafnium dibromide, (2-isopropyl-4,5,6,7-tetrahydroindenyl)(indenyl)titanium diiodide, (2-isopropyl-4,5,6,7-tetrahydroindenyl)(indenyl)zirconium diiodide, (2-isopropyl-4,5,6,7-tetrahydroindenyl)(indenyl)hafnium diiodide, (4,5,6,7-tetrahydroindenyl)(2-isopropylindenyl)titanium dichloride, (4,5,6,7-tetrahydroindenyl)(2-isopropylindenyl)zirconium dichloride, (4,5,6,7-tetrahydroindenyl)(2-isopropylindenyl)hafnium dichloride, (4,5,6,7-tetrahydroindenyl)(2-isopropylindenyl)titanium difluoride, (4,5,6,7-tetrahydroindenyl)(2-isopropylindenyl)zirconium difluoride, (4,5,6,7-tetrahydroindenyl)(2-isopropylindenyl)hafnium difluoride, (4,5,6,7-tetrahydroindenyl)(2-isopropylindenyl)titanium dibromide, (4,5,6,7-tetrahydroindenyl)(2-isopropylindenyl)zirconium dibromide, (4,5,6,7-tetrahydroindenyl)(2-isopropylindenyl)hafnium dibromide, (4,5,6,7-tetrahydroindenyl)(2-isopropylindenyl)titanium diiodide, (4,5,6,7-tetrahydroindenyl)(2-isopropylindenyl)zirconium diiodide, (4,5,6,7-tetrahydroindenyl)(2-isopropyfindenyl)hafnium diiodide, (1-n-butyl-4,5,6,7-tetrahydroindenyl)(indenyl)zirconium d ich loride, (1-n-butyl-4,5,6,7-tetrahydroindenyl)(indenyl)hafnium d ich loride, (1-n-butyl-4,5,6,7-tetrahydroindenyl)(indenyl)titanium difluoride, (1-n-butyl-4,5,6,7-tetrahydroindenyl)(indenyl)zirconium difluoride, (1-n-butyl-4,5,6,7-tetrahydroindenyl)(indenyl)hafnium difluoride, (1-n-butyl-4,5,6,7-tetrahydroindenyl)(indenyl)titanium dibromide, (1-n-butyl-4,5,6,7-tetrahydroindenyl)(indenyl)zirconium dibromide, (1-n-butyl-4,5,6,7-tetrahydroindenyl)(indenyl)hafnium dibromide, (1-n-butyl-4,5,6,7-tetrahydroindenyl)(indenyl)titanium diiodide, (1-n-butyl-4,5,6,7-tetrahydroindenyl)(indenyl)zirconium diiodide, (1-n-butyl-4,5,6,7-tetrahydroindenyl)(indenyl)hafnium diiodide, (4,5,6,7-tetrahydroindenyl)(1-n-butylindenyl)titanium dichloride, (4,5,6,7-tetrahydroindenyl)(1-n-butylindenyl)zirconium dichloride, (4,5,6,7-tetrahydroindenyl)(1-n-butylindenyl)hafnium dichloride, (4,5,6,7-tetrahydroindenyl)(1-propylindenyl)titanium difluoride, (4,5,6,7-tetrahydroindenyl)(1-n-butylindenyl)zirconium difluoride, (4,5,6,7-tetrahydroindenyl)(1-n-butylindenyl)hafnium difluoride, (4,5,6,7-tetrahydroindenyl)(1-n-butylindenyl)titanium dibromide, (4,5,6,7-tetrahydroindenyl)(1-n-butylindenyl)zirconium dibromide, (4,5,6,7-tetrahydroindenyl)(1-n-butylindenyl)hafnium dibromide, (4,5,6,7-tetrahydroindenyl)(1-n-butylindenyl)titanium diiodide, (4,5,6,7-tetrahydroindenyl)(1-n-butylindenyl)zirconium diiodide, (4,5,6,7-tetrahydroindenyl)(1-n-butylindenyl)hafnium diiodide, (2-n-butyl-4,5,6,7-tetrahydroindenyl)(indenyl)titanium dichloride, (2-n-butyl-4,5,6,7-tetrahydroindenyl)(indenyl)zirconium dichloride, (2-n-butyl-4,5,6,7-tetrahydroindenyl)(indenyl)hafnium dichloride, (2-n-butyl-4,5,6,7-tetrahydroindenyl)(indenyl)titanium difluoride, (2-n-butyl-4,5,6,7-tetrahydroindenyl)(indenyl)zirconium difluoride, (2-n-butyl-4,5,6,7-tetrahydroindenyl)(indenyl)hafnium difluoride, (2-n-butyl-4,5,6,7-tetrahydroindenyl)(indenyl)titanium dibromide, (2-n-butyl-4,5,6,7-tetrahydroindenyl)(indenyl)zirconium dibromide, (2-n-butyl-4,5,6,7-tetrahydroindenyl)(indenyl)hafnium dibromide, (2-n-butyl-4,5,6,7-tetrahydroindenyl)(indenyl)titanium diiodide, (2-n-butyl-4,5,6,7-tetrahydroindenyl)(indenyl)zirconium diiodide, (2-n-butyl-4,5,6,7-tetrahydroindenyl)(indenyl)hafnium diiodide, (4,5,6,7-tetrahydroindenyl)(2-n-butylindenyl)titanium dichloride, (4,5,6,7-tetrahydroindenyl)(2-n-butylindenyl)zirconium dichloride, (4,5,6,7-tetrahydroindenyl)(2-n-butylindenyl)hafnium dichloride, (4,5,6,7-tetrahydroindenyl)(2-n-butytindenyl)titanium difluoride, (4,5,6,7-tetrahydroindenyl)(2-n-butylindenyl)zirconium difluoride, (4,5,6,7-tetrahydroindenyl)(2-n-butylindenyl)hafnium difluoride, (4,5,6,7-tetrahydroindenyl)(2-n-butylindenyl)titanium dibromide, (4,5,6,7-tetrahydroindenyl)(2-n-butylindenyl)zirconium dibromide, (4,5,6,7-tetrahydroindenyl)(2-n-butylindenyl)hafnium dibromide, (4,5,6,7-tetrahydroindenyl)(2-n-butylindenyl)titanium diiodide, (4,5,6,7-tetrahydroindenyl)(2-n-butylindenyl)zirconium diiodide, (4,5,6,7-tetrahydroindenyl)(2-n-butylindenyl)hafnium diiodide, (1-isobutyl-4,5,6,7-tetrahydroindenyl)(indenyl)zirconium dichloride, (1-isobutyl-4,5,6,7-tetrahydroindenyl)(indenyl)hafnium dichloride, (1-isobutyl-4,5,6,7-tetrahydroindenyl)(indenyl)titanium difluoride, (1-isobutyl-4,5,6,7-tetrahydroindenyl)(indenyl)zirconium difluoride, (1-isobutyl-4,5,6,7-tetrahydroindenyl)(indenyl)hafnium difluoride, (1-isobutyl-4,5,6,7-tetrahydroindenyl)(indenyl)titanium dibromide, (1-isobutyl-4,5,6,7-tetrahydroindenyl)(indenyl)zirconium dibromide, (1-isobutyl-4,5,6,7-tetrahydroindenyl)(indenyl)hafnium dibromide, (1-isobutyl-4,5,6,7-tetrahydroindenyl)(indenyl)titanium diiodide, (1-isobutyl-4,5,6,7-tetrahydroindenyl)(indenyl)zirconium diiodide, (1-isobutyl-4,5,6,7-tetrahydroindenyl)(indenyl)hafnium diiodide, (4,5,6,7-tetrahydroindenyl)(1-isobutylindenyl)titanium dichloride, (4,5,6,7-tetrahydroindenyl)(1-isobutylindenyl)zirconium dichloride, (4,5,6,7-tetrahydroindenyl)(1-isobutylindenyl)hafnium dichloride, (4,5,6,7-tetrahydroindenyl)(1-isobutylindenyl)titanium difiluoride, (4,5,6,7-tetrahydroindenyl)(1-isobutylindenyl)zirconium difiluoride, (4,5,6,7-tetrahydroindenyl)(1-isobutylindenyl)hafnium difiluoride, (4,5,6,7-tetrahydroindenyl)(1-isobutylindenyl)titanium dibromide, (4,5,6,7-tetrahydroindenyl)(1-isobutylindenyl)zirconium dibromide, (4,5,6,7-tetrahydroindenyl)(1-isobutylindenyl)hafnium dibromide, (4,5,6,7-tetrahydroindenyl)(1-isobutylindenyl)titanium diiodide, (4,5,6,7-tetrahydroindenyl)(1-isobutylindenyl)zirconium diiodide, (4,5,6,7-tetrahydroindenyl)(1-isobutylindenyl)hafnium diiodide, (2-isobutyl-4,5,6,7-tetrahydroindenyl)(indenyl)titanium dichloride, (2-isobutyl-4,5,6,7-tetrahydroindenyl)(indenyl)zirconium dichloride, (2-isobutyl-4,5,6,7-tetrahydroindenyl)(indenyl)hafnium dichloride, (2-isobutyl-4,5,6,7-tetrahydroindenyl)(indenyl)titanium difluoride, (2-isobutyl-4,5,6,7-tetrahydroindenyl)(indenyl)zirconium difluoride, (2-isobutyl-4,5,6,7-tetrahydroindenyl)(indenyl)hafnium difluoride, (2-isobutyl-4,5,6,7-tetrahydroindenyl)(indenyl)titanium dibromide, (2-isobutyl-4,5,6,7-tetrahydroindenyl)(indenyl)zirconium dibromide, (2-isobutyl-4,5,6,7-tetrahydroindenyl)(indenyl)hafnium dibromide, (2-isobutyl-4,5,6,7-tetrahydroindenyl)(indenyl)titanium diiodide, (2-isobutyl-4,5,6,7-tetrahydroindenyl)(indenyl)zirconium diiodide, (2-isobutyl-4,5,5,7-tetrahydroindenyl)(indenyl)hafnium diiodide, (4,5,6,7-tetrahydroindenyl)(2-isobutylindenyl)titanium dichloride, (4,5,6,7-tetrahydroindenyl)(2-isobutylindenyl)zirconium dichloride, (4,5,6,7-tetrahydroindenyl)(2-isobutylindenyl)hafnium dichloride, (4,5,6,7-tetrahydroindenyl)(2-isobutylindenyl)titanium difluoride, (4,5,6,7-tetrahydroindenyl)(2-isobutylindenyl)zirconium difluoride, (4,5,6,7-tetrahydroindenyl)(2-isobutylindenyl)hafnium difluoride, (4,5,6,7-tetrahydroindenyl)(2-isobutylindenyl)titanium dibromide, (4,5,6,7-tetrahydroindenyl)(2-isobutylindenyl)zirconium dibromide, (4,5,6,7-tetrahydroindenyl)(2-isobutylindenyl)hafnium dibromide, (4,5,6,7-tetrahydro-indenyl)(2-isobutylindenyl)titanium diiodide, (4,5,6,7-tetrahydro-indenyl)(2-isobutylindenyl)zirconium diiodide, (4,5,6,7-tetrahydro-indenyl)(2-isobutylindenyl)hafnium diiod ide, (1-methyl-4,5,6,7-tetrahydroindenyl)(1-methylindenyl)titanium dichloride, (1-methyl-4,5,6,7-tetrahydroindenyl)(1-methylindenyl)zirconium dichloride, (1-methyl-4,5,6,7-tetrahydraindenyl)(indenyl)hafnium dichloride, (1-methyl-4,5,6,7-tetrahydroindenyl)(1-methylindenyl)titanium difluoride, (1-methyl-4,5,6,7-tetrahydroindenyl)(1-methylindenyl)zirconium difluoride, (1-methyl-4,5,6,7-tetrahydroindenyl)(1-methylindenyl)hafnium difluoride, (1-methyl-4,5,6,7-tetrahydroindenyl)(1-methylindenyl)titanium dibromide, (1-methyl-4,5,6,7-tetrahydroindenyl)(1-methylindenyl)zirconium dibromide, (1-methyl-4,5,5,7-tetrahydroindenyl)(1-methylindenyl)hafnium dibromide, (1-methyl-4,5,6,7-tetrahydroindenyl)(1-methylindenyl)titanium diiodide, (1-methyl-4 ,5,6,7-tetrahydroindenyl)(1-methylindenyl)zirconium diiodide, (1-methyl-4,5,6,7-tetrahydroindenyl)(1-methylindenyl)hafnium diiodide, (1-methyl-4,5,6,7-tetrahydroindenyl)(1-methylindenyl)titanium dichloride, (1-methyl-4,5,5,7-tetrahydroindenyl)(1-methylindenyl)zirconium dichloride, (1-methyl-4,5,6,7-tetrahydroindenyl)(1-methylindenyl)hafnium dichloride, (1-methyl-4,5,6,7-tetrahydroindenyl)(1-methylindenyl)titanium difluoride, (1-methyl-4,5,6,7-tetrahydroindenyl)(1-methylindenyl)zirconium difluoride, (1-methyl-4,5,6,7-tetrahydroindenyl)(1-methylindenyl)hafnium difluoride, (1-methyl-4,5,6,7-tetrahydroindenyl)(1-methylindenyl)titanium dibromide, (1-methyl-4,5,6,7-tetrahydroindenyl)(1-methylindenyl)zirconium dibromide, (1-methyl-4,5,6,7-tetrahydroindenyl)(1-methylindenyl)hafnium dibromide, (1-methyl-4,5,6,7-tetrahydroindenyl)(1-methylindenyl)titanium diiodide, (1-methyl-4,5,6,7-tetrahydroindenyl)(1-methylindenyl)zirconium diiodide, (1-methyl-4,5,6,7-tetrahydroindenyl)(1-methylindenyl)hafnium diiodide, (2-methyl-4,5,6,7-tetrahydroindenyl)(1-methylindenyl)titanium dichloride, (2-methyl-4,5,6,7-tetrahydroindenyl)(1-methylindenyl)zirconium dichloride, (2-methyl-4,5,6,7-tetrahydroindenyl)(1-methylindenyl)hafnium dichloride, (2-methyl-4,5,6,7-tetrahydroindenyl)(1-methylindenyl)titanium difluoride, (2-methyl-4,5,6,7-tetrahydroindenyl)(1-methylindenyl)zirconium difluoride, (2-methyl-4,5,6,7-tetrahydroindenyl)(1-methylindenyl)hafnium difluoride, (2-methyl-4,5,6,7-tetrahydroindenyl)(1-methylindenyl)titanium dibromide, (2-methyl-4,5,6,7-tetrahydroindenyl)(1-methylindenyl)zirconium dibromide, (2-methyl-4,5,6,7-tetrahydroindenyl)(1-methylindenyl)hafnium dibromide, (2-methyl-4,5,6,7-tetrahydroindenyl)(1-methylindenyl)titanium diiodide, (2-methyl-4,5,6,7-tetrahydroindenyl)(1-methylindenyl)zirconium diiodide, (2-methyl-4,5,6,7-tetrahydroindenyl)(1-methylindenyl)hafnium diiodide, (1-methyl-4,5,6,7-tetrahydroindenyl)(2-methylindenyl)titanium dichloride, (1-methyl-4,5,6,7-tetrahydroindenyl)(2-methylindenyl)zirconium dichloride, (1-methyl-4,5,6,7-tetrahydroindenyl)(2-methylindenyl)hafnium dichloride, (1-methyl-4,5,6,7-tetrahydroindenyl)(2-methylindenyl)titanium difluoride, (1-methyl-4,5,6,7-tetrahydroindenyl)(2-methylindenyl)zirconium difluoride, (1-methyl-4,5,6,7-tetrahydroindenyl)(2-methylindenyl)hafnium difluoride, (1-methyl-4,5,6,7-tetrahydroindenyl)(2-methylindenyl)titanium dibromide, (1-methyl-4,5,6,7-tetrahydroindenyl)(2-methylindenyl)zirconium dibromide, (1-methyl-4,5,6,7-tetrahydroindenyl)(2-methylindenyl)hafnium dibromide, (1-methyl-4,5,6,7-tetrahydroindenyl)(2-methylindenyl)titanium diiodide, (1-methyl-4,5,6,7-tetrahydroindenyl)(2-methylindenyl)zirconium diiodide, (1-methyl-4,5,6,7-tetrahydroindenyl)(2-methylindenyl)hafnium diiodide, (1-ethyl-4,5,6,7-tetrahydraindenyl)(1-methyl-indenyl)zirconium dichloride, (1-ethyl-4,5,6,7-tetrahydroindenyl)(1-methylindenyl)hafnium dichloride, (1-ethyl-4,5,6,7-tetrahydroindenyl)(1-methylindenyl)titanium difluoride, (1-ethyl-4,5,6,7-tetrahydroindenyl)(1-methylindenyl)zirconium difluoride, (1-ethyl-4,5,6,7-tetrahydroindenyl)(1-methylindenyl)hafnium difluoride, (1-ethyl-4,5,6,7-tetrahydroindenyl)(1-methylindenyl)titanium dibromide, (1-ethyl-4,5,6,7-tetrahydroindenyl)(1-methylindenyl)zirconium dibromide, (1-ethyl-4,5,6,7-tetrahydroindenyl)(1-methylindenyl)hafnium dibromide, (1-ethyl-4,5,6,7-tetrahydroindenyl)(1-methylindenyl)titanium diiodide, (1-ethyl-4,5,6,7-tetrahydroindenyl)(1-methylindenyl)zirconium diiodide, (1-ethyl-4,5,6,7-tetrahydroindenyl)(1-methylindenyl)hafnium diiodide, (1-methyl-4,5,6,7-tetrahydroindenyl)(1-ethylindenyl)titanium dichloride, (1-methyl-4,5,6,7-tetrahydroindenyl)(1-ethylindenyl)zirconium dichloride, (1-methyl-4,5,6,7-tetrahydroindenyl)(1-ethylindenyl)hafnium dichloride, (1-methyl-4,5,6,7-tetrahydroindenyl)(1-ethylindenyl)titanium difluoride, (1-methyl-4,5,6,7-tetrahydroindenyl)(1-ethylindenyl)zirconium difluoride, (1-methyl-4,5,6,7-tetrahydroindenyl)(1-ethylindenyl)hafnium difluoride, (1-methyl-4,5,6,7-tetrahydroindenyl)(1-ethylindenyl)titanium dibromide, (1-methyl-4,5,6,7-tetrahydroindenyl)(1-ethylindenyl)zirconium dibromide, (1-methyl-4,5,5,7-tetrahydroindenyl)(1-ethylindenyl)hafnium dibromide, (1-methyl-4,5,6,7-tetrahydroindenyl)(1-ethylindenyl)titanium diiodide, (1-methyl-4,5,6,7-tetrahydroindenyl)(1-ethylindenyl)zirconium diiodide, (1-methyl-4,5,6,7-tetrahydroindenyl)(1-ethylindenyl)hafnium diiodide, (2-ethyl-4,5,6,7-tetrahydroindenyl)(1-methylindenyl)titanium dichloride, (2-ethyl-4,5,6,7-tetrahydroindenyl)(1-methylindenyl)zirconium dichloride, (2-ethyl-4,5,6,7-tetrahydroindenyl)(1-methylindenyl)hafnium dichloride, (2-ethyl-4,5,6,7-tetrahydroindenyl)(1-methylindenyl)titanium difluoride, (2-ethyl-4,5,6,7-tetrahydroindenyl)(1-methylindenyl)zirconium difluoride, (2-ethyl-4,5,6,7-tetrahydroindenyl)(1-methylindenyl)hafnium difluoride, (2-ethyl-4,5,6,7-tetrahydroindenyl)(1-methylindenyl)titanium dibromide, (2-ethyl-4,5,6,7-tetrahydroindenyl)(1-methylindenyl)zirconium dibromide, (2-ethyl-4,5,6,7-tetrahydroindenyl)(1-methylindenyl)hafnium dibromide, (2-ethyl-4,5,6,7-tetrahydroindenyl)(1-methylindenyl)titanium diiodide, (2-ethyl-4,5,6,7-tetrahydroindenyl)(1-methylindenyl)zirconium diiodide, (2-ethyl-4,5,6,7-tetrahydroindenyl)(1-methylindenyl)hafnium diiodide, (1-methyl-4,5,6,7-tetrahydroindenyl)(2-ethylindenyl)titanium dichloride, (1-methyl-4,5,6,7-tetrahydroindenyl)(2-ethylindenyl)zirconium dichloride, (1-methyl-4,5,6,7-tetrahydroindenyl)(2-ethylindenyl)hafnium dichloride, (1-methyl-4,5,6,7-tetrahydroindenyl)(2-ethylindenyl)titanium difluoride, (1-methyl-4,5,6,7-tetrahydroindenyl)(2-ethylindenyl)zirconium difluoride, (1-methyl-4,5,6,7-tetrahydroindenyl)(2-ethylindenyl)hafnium difluoride, (1-methyl-4,5,6,7-tetrahydroindenyl)(2-ethylindenyl)titanium dibromide, (1-methyl-4,5,6,7-tetrahydroindenyl)(2-ethylindenyl)zirconium dibromide, (1-methyl-4,5,6,7-tetrahydroindenyl)(2-ethylindenyl)hafnium dibromide, (1-methyl-4,5,6,7-tetrahydroindenyl)(2-ethylindenyl)titanium diiodide, (1-methyl-4,5,6,7-tetrahydroindenyl)(2-ethylindenyl)zirconium diiodide, (1-methyl-4,5,6,7-tetrahydroindenyl)(2-ethylindenyl)hafnium diiodide, (1-propyl-4,5,6,7-tetrahydroindenyl)(1-methylindenyl)zirconium dichloride, (1-propyl-4,5,6,7-tetrahydroindenyl)(1-methylindenyl)hafnium dichloride, (1-propyl-4,5,6,7-tetrahydroindenyl)(1-methylindenyl)titanium difluoride, (1-propyl-4,5,6,7-tetrahydroindenyl)(1-methylindenyl)zirconium difluoride, (1-propyl-4,5,6,7-tetrahydroindenyl)(1-methylindenyl)hafnium difluoride, (1-propyl-4,5,6,7-tetrahydroindenyl)(1-methylindenyl)titanium dibromide, (1-propyl-4,5,6,7-tetrahydroindenyl)(1-methylindenyl)zirconium dibromide, (1-propyl-4,5,6,7-tetrahydroindenyl)(1-methylindenyl)hafnium dibromide, (1-propyl-4,5,6,7-tetrahydroindenyl)(1-methylindenyl)titanium diiodide, (1-propyl-4,5,6,7-tetrahydroindenyl)(1-methylindenyl)zirconium diiodide, (1-propyl-4,5,6,7-tetrahydroindenyl)(1-methylindenyl)hafnium diiodide, (1-methyl-4,5,6,7-tetrahydroindenyl)(1-propylindenyl)titanium dichloride, (1-methyl-4,5,6,7-tetrahydroindenyl)(1-propylindenyl)zirconium d ich loride, (1-methyl-4,5,6,7-tetrahydroindenyl)(1-propylindenyl)hafnium dichloride, (1-methyl-4,5,6,7-tetrahydroindenyl)(1-propylindenyl)titanium difluoride, (1-methyl-4,5,6,7-tetrahydroindenyl)(1-propylindenyl)zirconium difluoride, (1-methyl-4,5,6,7-tetrahydroindenyl)(1-propylindenyl)hafnium difluoride, (1-methyl-4,5,6,7-tetrahydroindenyl)(1-propylindenyl)titanium dibromide, (1-methyl-4,5,6,7-tetrahydroindenyl)(1-propylindenyl)zirconium dibromide, (1-methyl-4,5,6,7-tetrahydroindenyl)(1-propylindenyl)hafnium dibromide, (1-methyl-4,5,6,7-tetrahydroindenyl)(1-propylindenyl)titanium diiodide, (1-methy)-4,5,6,7-tetrahydroindenyl)(1-propylindenyl)zirconium diiodide, (1-methyl-4,5,6,7-tetrahydroindenyl)(1-propylindenyl)hafnium diiodide, (2-propyl-4,5,6,7-tetrahydroindenyl)(1-methylindenyl)titanium dichloride, (2-propyl-4,5,6,7-tetrahydroindenyl)(1-methylindenyl)zirconium dichloride, (2-propyl-4,5,6,7-tetrahydroindenyl)(1-methylindenyl)hafnium dichloride, (2-propyl-4,5,6,7-tetrahydroindenyl)(1-methylindenyl)titanium difluoride, (2-propyl-4,5,6,7-tetrahydroindenyl)(1-methylindenyl)zirconium difluoride, (2-propyl-4,5,6,7-tetrahydroindenyl)(1-methylindenyl)hafnium difluoride, (2-propyl-4,5,6,7-tetrahydroindenyl)(1-methylindenyl)titanium dibromide, (2-propyl-4,5,6,7-tetrahydroindenyl)(1-methylindenyl)zirconium dibromide, (2-propyl-4,5,6,7-tetrahydroindenyl)(1-methylindenyl)hafnium dibromide, (2-propyl-4,5,6,7-tetrahydroindenyl)(1-methylindenyl)titanium diiodide, (2-propyl-4,5,6,7-tetrahydroindenyl)(1-methylindenyl)zirconium diiodide, (2-propyl-4,5,6,7-tetranydroindenyl)(1-methyfindenyf)hafnium diiodide, (1-methyl-4,5,6,7-tetrahydroindenyl)(2-propylindenyl)titanium dichloride, (1-methyl-4,5,6,7-tetrahydroindenyl)(2-propylindenyl)zirconium dichloride, (1-methyl-4,5,6,7-tetrahydroindenyl)(2-propylindenyl)hafnium dichloride, (1-methyl-4,5,6,7-tetrahydroindenyl)(2-propylindenyl)titanium difluoride, (1-methyl-4,5,6,7-tetrahydroindenyl)(2-propylindenyl)zirconium difluoride, (1-methyl-4,5,6,7-tetrahydroindenyl)(2-propylindenyl)hafnium difluoride, (1-methyl-4,5,6,7-tetrahydroindenyl)(2-propylindenyl)titanium dibromide, (1-methyl-4,5,6,7-tetrahydroindenyl)(2-propylindenyl)zirconium dibromide, (1-methyl-4,5,6,7-tetrahydroindenyl)(2-propylindenyl)hafnium dibromide, (1-methyl-4,5,6,7-tetrahydroindenyl)(2-propylindenyl)titanium diiodide, (1-methyl-4,5,6,7-tetrahydroindenyl)(2-propylindenyl)zirconium diiodide, (1-methy)-4,5,6,7-tetrahydroindenyl)(2-propylindenyl)hafnium diiod ide, (1-isopropyl-4,5,6,7-tetrahydroindenyl)(1-methylindenyl)zirconium dichloride, (1-isopropyl-4,5,6,7-tetrahydroindenyl)(1-methylindenyl)hafnium dichloride, (1-isopropyl-4,5,6,7-tetrahydroindenyl)(1-methylindenyl)titanium difluoride, (1-isopropyl-4,5,6,7-tetrahydroindenyl)(1-methylindenyl)zirconium difluoride, (1-isopropyl-4,5,6,7-tetrahydroindenyl)(1-methylindenyl)hafnium difluoride, (1-isopropyl-4,5,6,7-tetrahydroindenyl)(1-methylindenyl)titanium dibromide, (1-isopropyl-4,5,6,7-tetrahydroindenyl)(1-methylindenyl)zirconium dibromide, (1-isopropyl-4,5,6,7-tetrahydroindenyl)(1-methylindenyl)hafnium dibromide, (1-isopropyl-4,5,6,7-tetrahydroindenyl)(1-methylindenyl)titanium diiodide, (1-isopropyl-4,5,6,7-fietrahydroindenyl)(1-methylindenyl)zirconium diiodide, (1-isopropyl-4,5,6,7-tetrahydroindenyl)(1-methylindenyl)hafnium diiodide, (1-methyl-4,5,6,7-tetrahydroindenyl)(1-isopropylindenyl)titanium dichloride, (1-methyl-4,5,6,7-tetrahydroindenyl)(1-isopropylindenyl)zirconium dichloride, (1-methyl-4,5,6,7-tetrahydroindenyl)(1-isopropylindenyl)hafnium dichloride, (1-methyl-4,5,6,7-tetrahydroindenyl)(1-isopropylindenyl)titanium difluoride, (1-methyl-4,5,6,7-tetrahydroindenyl)(1-isopropylindenyl)zirconium difluoride, (1-methyl-4,5,6,7-tetrahydroindenyl)(1-isopropylindenyl)hafnium difluoride, (1-methyl-4,5,6,7-tetrahydroindenyl)(1-isopropylindenyl)titanium dibromide, (1-methyl-4,5,6,7-tetrahydroindenyl)(1-isopropylindenyl)zirconium dibromide, (1-methyl-4,5,6,7-tetrahydroindenyl)(1-isopropylindenyl)hafnium dibromide, (1-methyl-4,5,6,7-tetrahydroindenyl)(1-isopropylindenyl)titanium diiodide, (1-methyl-4,5,6,7-tetrahydroindenyl)(1-isapropyfindenyl)zirconium diiodide, (1-methyl-4,5,6,7 -tetrahydroindenyl)(1-isopropylindenyl)hafnium diiodide, (2-isopropyl-4,5,6,7-tetrahydroindenyl)(1-methylindenyl)titanium dichloride, (2-isopropyl-4,5,6,7-tetrahydroindenyl)(1-methylindenyl)zirconium dichloride, (2-isopropyl-4,5,6,7-tetrahydroindenyl)(1-methylindenyl)hafnium dichloride, (2-isopropyl-4,5,6,7-tetrahydroindenyl)(1-methylindenyl)titanium difluoride, (2-isopropyl-4,5,6,7-tetrahydroindenyl)(1-methylindenyl)zirconium difluoride, (2-isopropyl-4,5,6,7-tetrahydroindenyl)(1-methylindenyl)hafnium difluoride, (2-isopropyl-4,5,6,7-tetrahydroindenyl)(1-methylindenyl)titanium dibromide, (2-isopropyl-4,5,6,7-tetrahydroindenyl)(1-methylindenyl)zirconium dibromide, (2-isopropyl-4,5,6,7-tetrahydroindenyl)(1-methylindenyl)hafnium dibromide, (2-isopropyl-4,5,6,7-tetrahydroindenyl)(1-methylindenyl)titanium diiodide, (2-isopropyl-4,5,6,7-tetrahydroindenyl)(1-methylindenyl)zirconium diiodide, (2-isopropyl-4,5,6,7-tetrahydroindenyl)(1-methylindenyl)hafnium diiodide, (1 -methyl-4,5,6,7-tetrahydroindenyl)(2-isopropylindenyl)titanium dichloride, (1-methyl-4,5,6,7-tetrahydroindenyl)(2-isopropylindenyl)zirconium dichloride, (1-methyl-4,5,6,7-tetrahydroindenyl)(2-isopropylindenyl)hafnium dichloride, (1-methyl-4,5,6,7-tetrahydroindenyl)(2-isopropylindenyl)titanium difluoride, (1-methyl-4,5,6,7-tetrahydroindenyl)(2-isopropylindenyl)zirconium difluoride, (1-methyl-4,5,6,7-tetrahydroindenyl)(2-isopropylindenyl)hafnium difluoride, (1-methyl-4,5,6,7-tetrahydroindenyl)(2-isopropylindenyl)titanium dibromide, (1-methyl-4,5,6,7-tetrahydroindenyl)(2-isopropylindenyl)zirconium dibromide, (1-methyl-4,5,6,7-tetrahydroindenyl)(2-isopropylindenyl)hafnium dibromide, (1-methyl-4,5,6,7-tetrahydroindenyl)(2-isopropylindenyl)titanium diiodide, (1-methyl-4,5,6,7-tetrahydroindenyl)(2-isopropylindenyl)zirconium diiodide, (1-methyl-4,5,6,7-tetrahydroindenyl)(2-isopropylindenyl)hafnium diiodide, (1-n-butyl-4,5,6,7-tetrahydroindenyl)(1-methylindenyl)zirconium dichloride, (1-n-butyl-4,5,6,7-tetrahydroindenyl)(1-methylindenyl)hafnium dichloride, (1-n-butyl-4,5,6,7-tetrahydroindenyl)(1-methylindenyl)titanium difluoride, (1-n-butyl-4,5,6,7-tetrahydroindenyl)(1-methylindenyl)zirconium difluoride, (1-n-butyl-4,5,6,7-tetrahydroindenyl)(1-methylindenyl)hafnium difluoride, (1-n-butyl-4,5,6,7-tetrahydroindenyl)(1-methylindenyl)titanium dibromide, (1-n-butyl-4,5,6,7-tetrahydroindenyl)(1-methylindenyl)zirconium dibromide, (1-n-butyl-4,5,6,7-tetrahydroindenyl)(1-methylindenyl)hafnium dibromide, (1-n-butyl-4,5,6,7-tetrahydroindenyl)(1-methylindenyl)titanium diiodide, (1-n-butyl-4,5,6,7-tetrahydroindenyl)(1-methylindenyl)zirconium diiodide, (1-n-butyl-4,5,6,7-tetrahydroindenyl)(1-methylindenyl)hafnium diiodide, (1-methyl-4,5,6,7-tetrahydroindenyl)(1-n-butylindenyl)titanium d ich loride, (1-methyl-4,5,6,7-tetrahydroindenyl)(1-n-butylindenyl)zirconium dichloride, (1-methyl-4,5,6,7-tetrahydroindenyl)(1-n-butylindenyl)hafnium dichloride, (1-methyl-4,5,6,7-tetrahydroindenyl)(1-propylindenyl)titanium difluoride, (1-methyl-4,5,6,7-tetrahydroindenyl)(1-n-butylindenyl)zirconium difluoride, (1-methyl-4,5,6,7-tetrahydroindenyl)(1-n-butylindenyl)hafnium difluoride, (1-methyl-4,5,6,7-tetrahydroindenyl)(1-n-butylindenyl)titanium dibromide, (1-methyl-4,5,6,7-tetrahydroindenyl)(1-n-butylindenyl)zirconium dibromide, (1-methyl-4,5,6,7-tetrahydroindenyl)(1-n-butylindenyl)hafnium dibromide, (1-methyl-4,5,6,7-tetrahydroindenyl)(1-n-butylindenyl)titanium diiodide, (1-methyl-4,5,6,7-tetrahydroindenyl)(1-n-butylindenyl)zirconium diiodide, (1-methyl-4,5,6,7-tetrahydroindenyl)(1-n-butylindenyl)hafnium diiodide, (2-n-butyl-4,5,6,7-tetrahydroindenyl)(1-methylindenyl)titanium dichloride, (2-n-butyl-4,5,6,7-tetrahydroindenyl)(1-methylindenyl)zirconium dichloride, (2-n-butyl-4,5,6,7-tetrahydroindenyl)(1-methylindenyl)hafnium dichloride, (2-n-butyl-4,5,6,7-tetrahydroindenyl)(1-methylindenyl)titanium difluoride, (2-n-butyl-4,5,6,7-tetrahydroindenyl)(1-methylindenyl)zirconium difluoride, (2-n-butyl-4,5,6,7-tetrahydroindenyl)(1₋methylindenyl)hafnium difluoride, (2-n-butyl-4,5,6,7-tetrahydroindenyl)(1-methylindenyl)titanium dibromide, (2-n-butyl-4,5,6,7-tetrahydroindenyl)(1-methylindenyl)zirconium dibromide, (2-n-butyl-4,5,6,7-tetrahydroindenyl)(1-methylindenyl)hafnium dibromide, (2-n-butyl-4,5,6,7-tetrahydroindenyl)(1-methylindenyl)titanium diiodide, (2-n-butyl-4,5,6,7-tetrahydroindenyl)(1-methylindenyl)zirconium diiodide, (2-n-butyl-4,5,6,7-tetrahydroindenyl)(1-methylindenyl)hafnium diiodide, (1-methyl-4,5,6,7-tetrahydroindenyl)(2-n-butylindenyl)titanium dichloride, (1-methyl-4,5,6,7-tetrahydroindenyl)(2-n-butylindenyl)zirconium dichloride, (1-methyl-4,5,6,7-tetrahydroindenyl)(2-n-butylindenyl)hafnium dichloride, (1-methyl-4,5,6,7-tetrahydroindenyl)(2-n-butylindenyl)titanium difluoride, (1-methyl-4,5,6,7-tetrahydroindenyl)(2-n-butylindenyl)zirconium difluoride, (1-methyl-4,5,6,7-tetrahydroindenyl)(2-n-butylindenyl)hafnium difluoride, (1-methyl-4,5,6,7-tetrahydroindenyl)(2-n-butylindenyl)titanium dibromide, (1-methyl-4,5,6,7-tetrahydroindenyl)(2-n-butylindenyl)zirconium dibromide, (1-methyl-4,5,6,7-tetrahydroindenyl)(2-n-butylindenyl)hafnium dibromide, (1-methyl-4,5,6,7-tetrahydroindenyl)(2-n-butylindenyl)titanium diiodide, (1-methyl-4,5,6,7-tetrahydroindenyl)(2-n-butylindenyl)zirconium diiodide, (1-methyl-4,5,6,7-tetrahydroindenyl)(2-n-butylindenyl)hafnium diiodide, (1-isobutyl-4,5,6,7-tetrahydroindenyl)(1-methylindenyl)zirconium dichloride, (1-isobutyl-4,5,6,7-tetrahydroindenyl)(1-methylindenyl)hafnium dichloride, (1-isobutyl-4,5,6,7-tetrahydroindenyl)(1-methylindenyl)titanium difluoride, (1-isobutyl-4,5,6,7-tetrahydroindenyl)(1-methylindenyl)zirconium difluoride, (1-isobutyl-4,5,6,7-tetrahydroindenyl)(1-methylindenyl)hafnium difluoride, (1-isobutyl-4,5,6,7-tetrahydroindenyl)(1-methylindenyl)titanium dibromide, (1-isobutyl-4,5,6,7-tetrahydroindenyl)(1-methylindenyl)zirconium dibromide, (1-isobutyl-4,5,6,7-tetrahydroindenyl)(1-methylindenyl)hafnium dibromide, (1-isobutyl-4,5,6,7-tetrahydroindenyl)(1-methylindenyl)titanium diiodide, (1-isobutyl-4,5,6,7-tetrahydroindenyl)(1-methylindenyl)zirconium diiodide, (1-isobutyl-4,5,6,7-tetrahydroindenyl)(1-methylindenyl)hafnium diiodide, (1-methyl-4,5,6,7-tetrahydroindenyl)(1-isobutylindenyl)titanium dichloride, (1-methyl-4,5,6,7-tetrahydroindenyl)(1-isobutylindenyl)zirconium dichloride, (1-methyl-4,5,6,7-tetrahydroindenyl)(1-isobutylindenyl)hafnium dichloride, (1-methyl-4,5,6,7-tetrahydroindenyl)(1-isobutylindenyl)titanium difluoride, (1-methyl-4,5,6,7-tetrahydroindenyl)(1-isobutylindenyl)zirconium difluoride, (1-methyl-4,5,6,7-tetrahydroindenyl)(1-isobutylindenyl)hafnium difluoride, (1-methyl-4,5,6,7-tetrahydroindenyl)(1-isobutylindenyl)titanium dibromide, (1-methyl-4,5,6,7-tetrahydroindenyl)(1-isobutylindenyl)zirconium dibromide, (1-methyl-4,5,6,7-tetrahydroindenyl)(1-isobutylindenyl)hafnium dibromide, (1-methyl-4,5,6,7-tetrahydroindenyl)(1-isobutylindenyl)titanium diiodide, (1-methyl-4,5,6,7-tetrahydroindenyl)(1-isobutylindenyl)zirconium diiodide, (1-methyl-4,5,6,7-tetrahydroindenyl)(1-isobutylindenyl)hafnium diiodide, (2-isobutyl-4,5,6,7-tetrahydroindenyl)(1-methylindenyl)titanium dichloride, (2-isobutyl-4,5,6,7-tetrahydroindenyl)(1-methylindenyl)zirconium dichloride, (2-isobutyl-4,5,6,7-tetrahydroindenyl)(1-methylindenyl)hafnium dichloride, (2-isobutyl-4,5,6,7-tetrahydroindenyl)(1-methylindenyl)titanium difluoride, (2-isobutyl-4,5,6,7-tetrahydroindenyl)(1-methylindenyl)zirconium difluoride, (2-isobutyl-4,5,6,7-tetrahydroindenyl)(1-methylindenyl)hafnium difluoride, (2-isobutyl-4,5,6,7-tetrahydroindenyl)(1-methylindenyl)titanium dibromide, (2-isobutyl-4,5,6,7-tetrahydroindenyl)(1-methylindenyl)zirconium dibromide, (2-isobutyl-4,5,6,7-tetrahydroindenyl)(1-methylindenyl)hafnium dibromide, (2-isobutyl-4,5,6,7-tetrahydroindenyl)(1-methylindenyl)titanium diiodide, (2-isobutyl-4,5,6,7-tetrahydroindenyl)(1-methylindenyl)zirconium diiodide, (2-isobutyl-4,5,6,7-tetrahydroindenyl)(1-methylindenyl)hafnium diiodide, (1-methyl-4,5,6,7-tetrahydroindenyl)(2-isobutylindenyl)titanium dichloride, (1-methyl-4,5,6,7-tetrahydroindenyl)(2-isobutylindenyl)zirconium dichloride, (1-methyl-4,5,6,7-tetrahydroindenyl)(2-isobutylindenyl)hafnium dichloride, (1-methyl-4,5,6,7-tetrahydroindenyl)(2-isobutylindenyl)titanium difluoride, (1-methyl-4,5,6,7-tetrahydroindenyl)(2-isobutylindenyl)zirconium difluoride, (1-methyl-4,5,6,7-tetrahydroindenyl)(2-isobutylindenyl)hafnium difluoride, (1-methyl-4,5,6,7-tetrahydroindenyl)(2-isobutylindenyl)titanium dibromide, (1-methyl-4,5,6,7-tetrahydroindenyl)(2-isobutylindenyl)zirconium dibromide, (1-methyl-4,5,6,7-tetrahydroindenyl)(2-isobutylindenyl)hafnium dibromide, (1-methyl-4,5,6,7-tetrahydroindenyl)(2-isobutylindenyl)titanium diiodide, (1-methyl-4,5,6,7-tetrahydroindenyl)(2-isobutylindenyl)zirconium diiodide, (1-methyl-4,5,6,7-tetrahydroindenyl)(2-isobutylindenyl)hafnium diiodide, (4,5,6,7-tetrahydroindenyl)(1-phenylindenyl)titanium dichloride, (4,5,6,7-tetrahydroindenyl)(1-phenylindenyl)zirconium dichloride, (4,5,6,7-tetrahydroindenyl)(1-phenylindenyl)hafnium dichloride, (4,5,6,7-tetrahydroindenyl)(1-phenylindenyl)titanium difluoride, (4,5,6,7-tetrahydroindenyl)(1-phenylindenyl)zirconium difluoride, (4,5,6,7-tetrahydroindenyl)(1-phenylindenyl)hafnium difluoride, (4,5,6,7-tetrahydroindenyl)(1-phenylindenyl)titanium dibromide, (4,5,6,7-tetrahydroindenyl)(1-phenylindenyl)zirconium dibromide, (4,5,6,7-tetrahydroindenyl)(1-phenylindenyl)hafnium dibromide, (4,5,6,7-tetrahydroindenyl)(1-phenylindenyl)titanium diiodide, (4,5,6,7-tetrahydroindenyl)(1-phenylindenyl)zirconium diiodide, (4,5,6,7-tetrahydroindenyl)(1-phenylindenyl)hafnium diiodide, (4,5,6,7-tetrahydroindenyl)(2-phenylindenyl)titanium dichloride, (4,5,6,7-tetrahydroindenyl)(2-phenylindenyl)zirconium dichloride, (4,5,6,7-tetrahydroindenyl)(2-phenylindenyl)hafnium dichloride, (4,5,6,7-tetrahydroindenyl)(2-phenylindenyl)titanium difluoride, (4,5,6,7-tetrahydroindenyf)(2-phenylindenyl)zirconium difluoride, (4,5,6,7-tetrahydroindenyl)(2-phenylindenyl)hafnium difluoride, (4,5,6,7-tetrahydroindenyl)(2-phenylindenyl)titanium dibromide, (4,5,6,7-tetrahydroindenyl)(2-phenylindenyl)zirconium dibromide, (4,5,6,7-tetrahydroindenyl)(2-phenylindenyl)hafnium dibromide, (4,5,6,7-tetrahydroindenyl)(2-phenylindenyl)titanium diiodide, (4,5,6,7-tetrahydroindenyl)(2-phenylindenyl)zirconium diiodide, (4,5,6,7-tetrahydroindenyl)(2-phenylindenyl)hafnium diiodide, (4,5,6,7-tetrahydroindenyl)(1-benzylindenyl)titanium dichloride, (4,5,6,7-tetrahydroindenyl)(1-benzylindenyl)zirconium dichloride, (4,5,6,7-tetrahydroindenyl)(1-benzylindenyl)hafnium dichloride, (4,5,6,7-tetrahydroindenyl)(1-benzylindenyl)titanium difluoride, (4,5,6,7-tetrahydroindenyl)(1-benzylindenyl)zirconium difluoride, (4,5,6,7-tetrahydroindenyl)(1-benzylindenyl)hafnium difluoride, (4,5,6,7-tetrahydroindenyl)(1-benzylindenyl)titanium dibromide, (4,5,6,7-tetrahydroindenyl)(1-benzylindenyl)zirconium dibromide, (4,5,6,7-tetrahydroindenyl)(1-benzylindenyl)hafnium dibromide, (4,5,6,7-tetrahydroindenyl)(1-benzylindenyl)titanium diiodide, (4,5,6,7-tetrahydroindenyl)(1-benzylindenyl)zirconium diiodide, (4,5,6,7-tetrahydroindenyl)(1-benzylindenyl)hafnium diiodide, (4,5,6,7-tetrahydroindenyl)(2-benzylindenyl)titanium dichloride, (4,5,6,7-tetrahydroindenyl)(2-benzylindenyl)zirconium dichloride, (4,5,6,7-tetrahydroindenyl)(2-benzylindenyl)hafnium dichloride, (4,5,6,7-tetrahydroindenyl)(2-benzylindenyl)titanium difluoride, (4,5,6,7-tetrahydroindenyl)(2-benzylindenyl)zirconium difluoride, (4,5,6,7-tetrahydroindenyl)(2-benzylindenyl)hafnium difluoride, (4,5,6,7-tetrahydroindenyl)(2-benzylindenyl)titanium dibromide, (4,5,6,7-tetrahydroindenyl)(2-benzylindenyl)zirconium dibromide, (4,5,6,7-tetrahydroindenyl)(2-benzylindenyl)hafnium dibromide, (4,5,6,7-tetrahydroindenyl)(2-benzylindenyl)titanium diiodide, (4,5,6,7-tetrahydroindenyl)(2-benzylindenyl)zirconium diiodide, (4,5,6,7-tetrahydroindenyl)(2-benzylindenyl)hafnium diiodide, (4,5,6,7-tetrahydroindenyl)(cyclopentadienyl)titanium dichloride, (4,5,6,7-tetrahydroindenyl)(cyclopentadienyl)zirconium dichloride, (4,5,6,7-tetrahydroindenyl)(cyclopentadienyl)hafnium dichloride, (4,5,6,7-tetrahydroindenyl)(cyclopentadienyl)titanium difluoride, (4,5,6,7-tetrahydroindenyl)(cyclopentadienyl)zirconium difluoride, (4,5,6,7-tetrahydroindenyl)(cyclopentadienyl)hafnium difluoride, (4,5,6,7-tetrahydroindenyl)(cyclopentadienyl)titanium dibromide, (4,5,6,7-tetrahydroindenyl)(cyclopentadienyl)zirconium dibromide, (4,5,6,7-tetrahydroindenyl)(cyclopentadienyl)hafnium dibromide, (4,5,6,7-tetrahydroindenyl)(cyclopentadienyl)titanium diiodide, (4,5,6,7-tetrahydroindenyl)(cyclopentadienyl)zirconium diiodide, (4,5,6,7-tetrahydroindenyl)(cyclopentadienyl)hafnium diiodide, (4,5,6,7-tetrahydroindenyl)(methylcyclopentadienyl)titanium dichloride, (4,5,6,7-tetrahydroindenyl)(methylcyclopentadienyl)zirconium dichloride, (4,5,6,7-tetrahydroindenyl)(methylcyclopentadienyl)hafnium dichloride, (4,5,6,7-tetrahydroindenyl)(methylcyclopentadienyl)titanium difluoride, (4,5,6,7-tetrahydroindenyl)(methylcyclopentadienyl)zirconium difluoride, (4,5,6,7-tetrahydroindenyl)(methylcyclopentadienyl)hafnium difluoride, (4,5,6,7-tetrahydroindenyl)(methylcyclopentadienyl)titanium dibromide, (4,5,6,7-tetrahydroindenyl)(methylcyclopentadienyl)zirconium dibromide, (4,5,6,7-tetrahydroindenyl)(methylcyclopentadienyl)hafnium dibromide, (4,5,6,7-tetrahydroindenyl)(methylcyclopentadienyl)titanium diiodide, (4,5,6,7-tetrahydroindenyl)(methylcyclopentadienyl)zirconium diiodide, (4,5,6,7-tetrahydroindenyl)(methylcyclopentadienyl)hafnium diiodide, (4,5,6,7-tetrahydroindenyl)(ethylcyclopentadienyl)zirconium dichloride, (4,5,6,7-tetrahydroindenyl)(ethylcyclopentadienyl)hafnium dichloride, (4,5,6,7-tetrahydroindenyl)(ethylcyclopentadienyl)titanium difluoride, (4,5,6,7-tetrahydroindenyl)(ethylcyclopentadienyl)zirconium difluoride, (4,5,6,7-tetrahydroindenyl)(ethylcyclopentadienyl)hafnium difluoride, (4,5,6,7-tetrahydroindenyl)(ethylcyclopentadienyl)titanium dibromide, (4,5,6,7-tetrahydroindenyl)(ethylcyclopentadienyl)zirconium dibromide, (4,5,6,7-tetrahydroindenyl)(ethylcyclopentadienyl)hafnium dibromide, (4,5,6,7-tetrahydroindenyl)(ethylcyclopentadienyl)titanium diiodide, (4,5,6,7-tetrahydroindenyl)(ethylcyclopentadienyl)zirconium diiodide, (4,5,6,7-tetrahydroindenyl)(ethylcyclopentadienyl)hafnium diiodide, (4,5,6,7-tetrahydroindenyl)(propylcyclopentadienyl)zirconium dichloride, (4,5,6,7-tetrahydroindenyl)(propylcyclopentadienyl)hafnium dichloride, (4,5,6,7-tetrahydroindenyl)(propylcyclopentadienyl)titanium difluoride, (4,5,6,7-tetrahydroindenyl)(propylcyclopentadienyl)zirconium difluoride, (4,5,6,7-tetrahydroindenyl)(propylcyclopentadienyl)hafnium difluoride, (4,5,6,7-tetrahydroindenyl)(propylcyclopentadienyl)titanium dibromide, (4,5,6,7-tetrahydroindenyl)(propylcyclopentadienyl)zirconium dibromide, (4,5,6,7-tetrahydroindenyl)(propylcyclopentadienyl)hafnium dibromide, (4,5,6,7-tetrahydroindenyl)(propylcyclopentadienyl)titanium diiodide, (4,5,6,7-tetrahydroindenyl)(propylcyclopentadienyl)zirconium diiodide, (4,5,6,7-tetrahydroindenyl)(propylcyclopentadienyl)hafnium diiodide, (4,5,6,7-tetrahydroindenyl)(n-butylcyclopentadienyl)zirconium dichloride, (4,5,6,7-tetrahydroindenyl)(n-butylcyclopentadienyl)hafnium dichloride, (4,5,6,7-tetrahydroindenyl)(n-butylcyclopentadienyl)titanium difluoride, (4,5,6,7-tetrahydroindenyl)(n-butylcyclopentadienyl)zirconium difluoride, (4,5,6,7-tetrahydroindenyl)(n-butylcyclopentadienyl)hafnium difluoride, (4,5,6,7-tetrahydroindenyl)(n-butylcyclopentadienyl)titanium dibromide, (4,5,6,7-tetrahydroindenyl)(n-butylcyclopentadienyl)zirconium dibromide, (4,5,6,7-tetrahydroindenyl)(n-butylcyclopentadienyl)hafnium dibromide, (4,5,6,7-tetrahydroindenyl)(n-butylcyclopentadienyl)titanium diiodide, (4,5,6,7-tetrahydroindenyl)(n-butylcyclopentadienyl)zirconium diiodide, (4,5,6,7-tetrahydroindenyl)(n-butylcyclopentadienyl)hafnium diiodide, (4,5,6,7-tetrahydroindenyl)(isobutylcyclopentadienyl)zirconium dichloride, (4,5,6,7-tetrahydroindenyl)(isobutylcyclopentadienyl)hafnium dichloride, (4,5,6,7-tetrahydroindenyl)(isobutylcyclopentadienyl)titanium difluoride, (4,5,6,7-tetrahydroindenyl)(isobutylcyclopentadienyl)zirconium difluoride, (4,5,6,7-tetrahydroindenyl)(isobutylcyclopentadienyl)hafnium difluoride, (4,5,6,7-tetrahydroindenyl)(isobutylcyclopentadienyl)titanium dibromide, (4,5,6,7-tetrahydroindenyl)(isobutylcyclopentadienyl)zirconium dibromide, (4,5,6,7-tetrahydroindenyl)(isobutylcyclopentadienyl)hafnium dibromide, (4,5,6,7-tetrahydroindenyl)(isobutylcyclopentadienyl)titanium diiodide, (4,5,6,7-tetrahydroindenyl)(isobutylcyclopentadienyl)zirconium diiodide, (4,5,6,7-tetrahydroindenyl)(isobutylcyclopentadienyl)hafnium diiodide, (4,5,6,7-tetrahydroindenyl)(1-methyl-3-n-butylcyclopentadienyl)zirconium dichloride, (4,5,6,7-tetrahydroindenyl)(1-methyl-3-n-butylcyclopentadienyl)hafnium dichloride, (4,5,6,7-tetrahydroindenyl)(1-methyl-3-n-butylcyclopentadienyl)titanium difluoride, (4,5,6,7-tetrahydroindenyl)(1-methyl-3-n-butylcyclopentadienyl)zirconium difluoride, (4,5,6,7-tetrahydroindenyl)(1-methyl-3-n-butylcyclopentadienyl)hafnium difluoride, (4,5,6,7-tetrahydroindenyl)(1-methyl-3-n-butylcyclopentadienyl)titanium dibromide, (4,5,6,7-tetrahydroindenyl)(1-methyl-3-n-butylcyclopentadienyl)zirconium dibromide, (4,5,6,7-tetrahydroindenyl)(1-methyl-3-n-butylcyclopentadienyl)hafnium dibromide, (4,5,6,7-tetrahydroindenyl)(1-methyl-3-n-butylcyclopentadienyl)titanium diiodide, (4,5,6,7-tetrahydroindenyl)(1-methyl-3-n-butylcyclopentadienyl)zirconium diiodide, (4,5,6,7-tetrahydroindenyl)(1-methyl-3-n-butylcyclopentadienyl)hafnium diiodide, (4,5,6,7-tetrahydroindenyl)(pentamethylcyclopentadienyl)zirconium dichloride, (4,5,6,7-tetrahydroindenyl)(pentamethylcyclopentadienyl)hafnium dichloride, (4,5,6,7-tetrahydroindenyl)(pentamethylcyclopentadienyl)titanium difluoride, (4,5,6,7-tetrahydroindenyl)(pentamethylcyclopentadienyl)zirconium difluoride, (4,5,6,7-tetrahydroindenyl)(pentamethylcyclopentadienyl)hafnium difluoride, (4,5,6,7-tetrahydroindenyl)(pentamethylcyclopentadienyl)titanium dibromide, (4,5,6,7-tetrahydroindenyl)(pentamethylcyclopentadienyl)zirconium dibromide, (4,5,6,7-tetrahydroindenyl)(pentamethylcyclopentadienyl)hafnium dibromide, (4,5,6,7-tetrahydroindenyl)(pentamethylcyclopentadienyl)titanium diiodide, (4,5,6,7-tetrahydroindenyl)(pentamethylcyclopentadienyl)zirconium diiodide, (4,5,6,7-tetrahydroindenyl)(pentamethylcyclopentadienyl)hafnium diiodide, (4,5,6,7-tetrahydroindenyl)(tetramethylcyclopentadienyl)zirconium dichloride, (4,5,6,7-tetrahydroindenyl)(tetramethylcyclopentadienyl)hafnium dichloride, (4,5,6,7-tetrahydroindenyl)(tetramethylcyclopentadienyl)titanium difluoride, (4,5,6,7-tetrahydroindenyl)(tetramethylcyclopentadienyl)zirconium difluoride, (4,5,6,7-tetrahydroindenyl)(tetramethylcyclopentadienyl)hafnium difluoride, (4,5,6,7-tetrahydroindenyl)(tetramethylcyclopentadienyl)titanium dibromide, (4,5,6,7-tetrahydroindenyl)(tetramethylcyclopentadienyl)zirconium dibromide, (4,5,6,7-tetrahydroindenyl)(tetramethylcyclopentadienyl)hafnium dibromide, (4,5,6,7-tetrahydroindenyl)(tetramethylcyclopentadienyl)titanium diiodide, (4,5,6,7-tetrahydroindenyl)(tetramethylcyclopentadienyl)zirconium diiodide, (4,5,6,7-tetrahydroindenyl)(tetramethylcyclopentadienyl)hafnium diiodide, (4,5,6,7-tetrahydroindenyl)(cyclopentylcyclopentadienyl)zirconium dichloride, (4,5,6,7-tetrahydroindenyl)(cyclopentylcyclopentadienyl)hafnium dichloride, (4,5,6,7-tetrahydroindenyl)(cyclopentylcyclopentadienyl)titanium difluoride, (4,5,6,7-tetrahydroindenyl)(cyclopentylcyclopentadienyl)zirconium difluoride, (4,5,6,7-tetrahydroindenyl)(cyclopentylcyclopentadienyl)hafnium difluoride, (4,5,6,7-tetrahydroindenyl)(cyclopentylcyclopentadienyl)titanium dibromide, (4,5,6,7-tetrahydroindenyl)(cyclopentylcyclopentadienyl)zirconium dibromide, (4,5,6,7-tetrahydroindenyl)(cyclopentylcyclopentadienyl)hafnium dibromide, (4,5,6,7-tetrahydroindenyl)(cyclopentylcyclopentadienyl)titanium diiodide, (4,5,6,7-tetrahydroindenyl)(cyclopentylcyclopentadienyl)zirconium diiodide, (4,5,6,7-tetrahydroindenyl)(cyclopentylcyclopentadienyl)hafnium diiodide, (4,5,6,7-tetrahydroindenyl)(cyclohexylcyclopentadienyl)zirconium dichloride, (4,5,6,7-tetrahydroindenyl)(cyclohexylcyclopentadienyl)hafnium dichloride, (4,5,6,7-tetrahydroindenyl)(cyclohexylcyclopentadienyl)titanium difluoride, (4,5,6,7-tetrahydroindenyl)(cyclohexylcyclopentadienyl)zirconium difluoride, (4,5,6,7-tetrahydroindenyl)(cyclohexylcyclopentadienyl)hafnium difluoride, (4,5,6,7-tetrahydroindenyl)(cyclohexylcyclopentadienyl)titanium dibromide, (4,5,6,7-tetrahydroindenyl)(cyclohexylcyclopentadienyl)zirconium dibromide, (4,5,6,7-tetrahydroindenyl)(cyclohexylcyclopentadienyl)hafnium dibromide, (4,5,6,7-tetrahydroindenyl)(cyclohexylcyclopentadienyl)titanium diiodide, (4,5,6,7-tetrahydroindenyl)(cyclohexylcyclopentadienyl)zirconium diiodide, (4,5,6,7-tetrahydroindenyl)(cyclohexylcyclopentadienyl)hafnium diiodide, (4,5,6,7-tetrahydroindenyl)(silacyclobutylcyclopentadienyl)zirconium dichloride, (4,5,6,7-tetrahydroindenyl)(silacyclobutylcyclopentadienyl)hafnium dichloride, (4,5,6,7-tetrahydroindenyl)(silacyclobutylcyclopentadienyl)titanium difluoride, (4,5,6,7-tetrahydroindenyl)(silacyclobutylcyclopentadienyl)zirconium difluoride, (4,5,6,7-tetrahydroindenyl)(silacyclobutylcyclopentadienyl)hafnium difluoride, (4,5,6,7-tetrahydroindenyl)(silacyclobutylcyclopentadienyl)titanium dibromide, (4,5,6,7-tetrahydroindenyl)(silacyclobutylcyclopentadienyl)zirconium dibromide, (4,5,6,7-tetrahydroindenyl)(silacyclobutylcyclopentadienyl)hafnium dibromide, (4,5,6,7-tetrahydroindenyl)(silacyclobutylcyclopentadienyl)titanium diiodide, (4,5,6,7-tetrahydroindenyl)(silacyclobutylcyclopentadienyl)zirconium diiodide, (4,5,6,7-tetrahydroindenyl)(silacyclobutylcyclopentadienyl)hafnium diiodide, mixtures thereof, and similar compounds thereof.

The metallocene compound of the present invention is not limited to the above listed examples, but includes a metallocene compound including ligands having other substituted or unsubstituted tetrahydroindenyl (4HInd) nucleus. The metallocene compound of the present invention can be prepared by a conventional method for preparing metallocene compounds. For example, as stated in the following Examples, bis(tetrahydroindenyl)zirconium dichloride and zirconium chloride are reacted to obtain (tetrahydroindenyl)zirconium trichloride, and obtained (tetrahydroindenyl)zirconium trichloride and indenyl lithium are reacted to obtain (tetrahydroindenyl)(indenyl)zirconium dichloride.

The olefin polymerization catalyst composition (system) according to the present invention comprises the metallocene compound and an activator which is reacted with the metallocene compound so that the metallocene compound has catalytic activation. As the activator, a conventional activator such as an alkyl aluminoxane, an organic aluminum compound, a bulky aromatic fluoride compound, a modified clay, a Lewis acid inorganic oxide, and so on can be used alone, or mixtures thereof can be used. As the alkyl aluminoxane represented by Formula 2, commercially available alkyl aluminoxanes of linear, cyclic or network structure can be used. The non-limiting examples of the alkyl aluminoxane include hydrocarbyl aluminoxanes represented by Formulas 3 and 4 which are oligomers having a linear or cyclic structure, such as methylaluminoxane, ethylaluminoxane, butylaluminoxane, isobutylaluminoxane, hexylaluminoxane, octylaluminoxane, decylaluminoxane, mixtures thereof, and so on, and preferably an aromatic hydrocarbon solution of aluminoxane which is a commercial hydrocarbon solution of aluminoxane, and more preferably an aluminoxane dissolved in toluene. In the present invention, a single aluminoxane or mixtures of more than one aluminoxanes can be used.

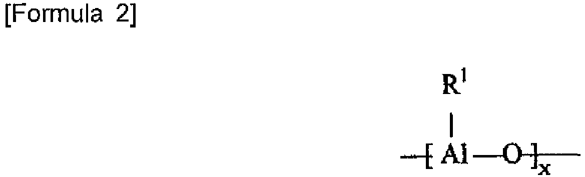

In Formula 2, R' is a hydrocarbyl radical of 1 to 10 carbon atoms, and x is an integer of 1 to 70.

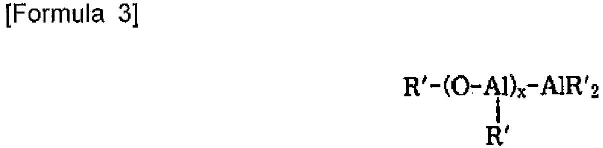

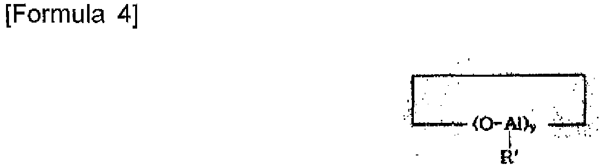

In Formulas 3 and 4, R' is independently hydrocarbyl radicals, preferably linear or a branched alkyl radicals of 1 to 10 carbon atoms. Namely, R' can be same or different from each other. More preferably, most portions of R' are methyl groups x is an integer of 1 to 50, preferably 10 to 40. y is an integer of 3 to 50, preferably 10 to 40. The alkyl aluminoxane can be prepared by various conventional methods such as adding proper amount of water to trialkylaluminum, or reacting a hydrocarbyl compound containing water or an inorganic hydrated salt with trialkylaluminum, from which, conventionally, a mixture of linear aluminoxane and cyclic aluminoxane is obtained.

Also, the catalyst composition of the present invention can comprise an organic aluminum compound represented by Formula 5 as an impurity remover.

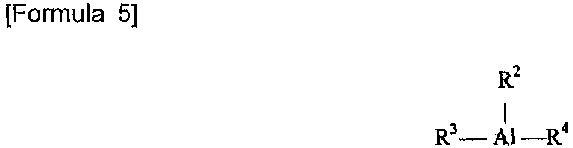

In Formula 5, R², R³ and R⁴ are independently an alkyl or alkoxy group of 1 to 10 carbon atoms or a halide group(fluorine group, chlorine group, bromine group, iodine group and so on), and at least one of R², R³ and R⁴ is an alkyl group. Non-limiting examples of the organic aluminum compound include trialkylaluminum such as trimethylaluminum, triethylaluminum, tributylaluminum, trihexylaluminum, trioctylaluminum, tridecylaluminum and so on; dialkylaluminum alkoxide such as dimethylaluminum methoxide, diethylaluminum methoxide, dibutylaluminum methoxide and so on; dialkylaluminum halide such as dimethylaluminum chloride, diethylaluminum chloride, dibutylaluminum chloride and so on; alkylaluminum dialkoxide such as methylaluminum dimethoxide, ethylaluminum dimethoxide, butylaluminum dimethoxide and so on; alkylaluminum dihalide such as methylaluminum dichloride, ethylaluminum dichloride, butylaluminum dichloride and so on; and mixtures thereof.

In the catalyst composition according to the present invention, the bulky compound having aromatic group substituted by fluorine (bulky aromatic fluoride compound) as an activator can be represented by Formula 6.

[Formula 6] [C] [D]

In Formula 6, C is a cation which is a Lewis base combined with hydrogen ion, or a metal or non-metal compound having an oxidation power, and D is a compound including an element of Group 5 to Group 15 of Periodic Table and an organic substance. Non-limiting examples of the bulky aromatic fluoride compound(ionic compound of an aromatic boron substituted by fluorine) include trimethylammonium tetrakis(pentafluorophenyl)borate, triethylammonium tetrakis(pentafluorophenyl)borate, tripropylammonium tetrakis(pentafluorophenyl)borate, tributylammonium tetrakis(pentafluorophenyl)borate, anilinium tetrakis(pentafluorophenyl)borate, pyridinium tetrakis(pentafluorophenyl)borate, Ferrocenium tetrakis(pentafluorophenyl)borate, silver tetrakis(pentafluorophenyl)borate, tris(pentafluorophenyl)borane, tri(3,4,5-trifluorophenyl)borane, mixtures thereof, and so on.

Non-limiting examples of the modified clay which can be used as the activator include N,N-dimethylanilinium montmorillonite, N,N-dimethylanilinium hectorite, mixtures thereof, and so on. And examples of the Lewis acid inorganic oxide as the activator include fluorinated silica alumina and so on.

The olefin polymerization catalyst composition according to the present invention can be prepared by mixing the metallocene compound represented by Formula 1 and the aluminoxane. Wherein the amount of the aluminum of aluminoxanes represented by Formulas 2, 3, 4 and so on, is 1 to 100,000 moles, preferably 5 to 5,000 moles with respect to 1 mole of the metallocene compound represented by Formula 1. When the bulky aromatic fluoride compound(Formula 6) is an organic boron compound, the mole ratio of the organic boron compound and the metallocene compound([organic boron compound]/[metallocene compound]) is generally 1 to 1,000, and preferably 1 to 100. If the metallocene compound of the present invention is mixed with the organic aluminum compound, modified clay, Lewis acid inorganic compound and so on, the mixing ratio may vary according to the purpose of usage, the kind of catalyst and so on, and be properly set according to a conventional technology.

The compounds of the catalyst composition can be mixed without specific limitations. For example, the metallocene compound represented by Formula 1 and the aluminoxane are mixed for 5 minutes to 10 hours, preferably for 15 minutes to 4 hours. The mixing process of the compounds is not limited, but it is desirable that the two compounds should be mixed under an inert atmosphere of nitrogen or argon, without a solvent, or in the presence of an inert hydrocarbon solvent such as heptane, hexane, benzene, toluene, xylene or mixtures thereof. The temperature of the mixing process is 0 to 150°C, preferably 10 to 90°C. The catalyst solution in which the catalyst is uniformly dissolved in the hydrocarbon solvent can be used as it stands, or the catalyst in a solid powder state after the solvent has been removed can be used. The catalyst in a solid powder state can be prepared by carrying out a precipitation reaction of the catalyst solution, and solidifying the precipitate from the reaction.

The present invention also provides an olefin polymerization catalyst composition prepared after the catalyst composition comprising the metallocene compound represented by Formula 1 and the activator such as aluminoxane represented by Formula 2 is contacted with an organic or inorganic carrier. The catalyst composition and/or activator can exist in a form supported by the carrier or a form of an insoluble particle of the carrier, as well as a form of a homogeneous solution. The method for contacting the catalyst composition of the present invention with the carrier will be explained. At first, a solution state catalyst is prepared by mixing the metallocene compound represented by Formula 1 and the aluminoxane compound represented by Formula 2, and the catalyst is contacted with a porous carrier(for example, a silica carrier having pore sizes of 50 to 500 Å and a pore volume of 0.1 to 5.0 cm³/g) to form a slurry. Next, the mixture is treated with an acoustic wave or oscillating wave having the frequency of 1 to 10.000kHz at 0°C to 120°C for 1 to 6 hours to uniformly infiltrate the catalyst components into the pores of the carrier. And then, the catalyst slurry is dried under vacuum or nitrogen flow to form a catalyst of a solid powder state. The acoustic wave or oscillating wave is preferably ultrasonic waves, and more preferably a wave of the frequency of 20 to 500 kHz. After applying the acoustic wave or the oscillating wave to the catalyst, the step of supporting the catalyst on a carrier may also include the step of washing the supported catalyst with a hydrocarbon selected from the group consisting of pentane, hexane, heptane, isoparaffin, toluene, xylene and mixtures thereof.

As the carrier, porous inorganic compounds, inorganic salts, and organic compounds with micro pores and a large surface area can be used without restrictions. The shape of the inorganic carrier for which there is no specific limit if the shape can be maintained during the preparation process of the supported catalysts, may be in any shape such as powder, particle, flake, foil, fiber, and so on. Regardless of the shape of the inorganic carrier, the maximum length of the inorganic carrier is generally from 5 to 200 µm, preferably from 10 to 100 µm, the preferable surface area of the inorganic carrier is 50 to 1,000 m²/g and the preferable pore volume is 0.05 to 5 cm³/g. Generally, the inorganic carrier should be treated to remove water or hydroxyl group thereform before use. The treatment can be carried out by calcining the carrier at 200°C to 900°C under an inert atmosphere such as air, nitrogen, argon, or so on. Non-limiting examples of the inorganic salt carrier or the inorganic carrier include silica, alumina, bauxite, zeolite, magnesium chloride(MgCl₂), calcium chloride(CaCl₂), magnesium oxide(MgO), zirconium dioxide(ZrO₂), titanium dioxide(TiO₂), boron trioxide(B₂O₃), calcium oxide(CaO), zinc oxide(ZnO), barium oxide(BaO), thorium oxide(ThO₂) and mixtures thereof such as silica-magnesium oxide(SiO₂-MgO), silica-alumina(SiO₂-Al₂O₃), silica-titanium dioxide(SiO₂-TiO₂), silica-vanadium pentoxide(SiO₂-V₂O₅), silica-chromium trioxide(SiO₂-CrO₃), silica-titanium dioxide-magnesium oxide(SiO₂-TiO₂-MgO) or so on. Small amount of carbonate, sulfate, or nitrate can be added to these compounds. Non-limiting examples of the organic carrier include starch, cyclodextrin, synthetic polymer or so on.

Examples of the solvent, which is used for bringing the catalyst of the present invention into contact with the carrier, include an aliphatic hydrocarbon solvent such as pentane, hexane, heptane, octane, nonane, decane, undecane, dodecane and so on, an aromatic hydrocarbon solvent such as benzene, monochlorobenzene, dichlorobenzene, trichlorobenzene, toluene and so on, a halogenated aliphatic hydrocarbon solvent such as dichloromethane, trichloromethane, dichloroethane, trichloroethane and so on, and so on. The solvent or the mixtures thereof can be used for the supporting process. The ratio of the metallocene compound and aluminoxane in the olefin polymerization catalyst composition contacted with the carrier is not particularly limited, but it is desirable that the amount of the aluminum of aluminoxane represented by Formula 2 is 1 to 1,000 moles, preferably 1 to 500 moles with respect to 1 mole of the metallocene compound represented by Formula 1.

The present invention provides an olefin polymerization process including the step of polymerizing at least one olefin in the presence of the polymerization catalyst composition which comprises the metallocene compound represented by Formula 1, if necessary, the activator such as aluminoxane compound represented by Formula 2, the organic or inorganic carrier, and so on. The olefin polymerization catalyst composition of the present invention can exist in a form supported with an inorganic carrier (silica, alumina, silica-alumina mixture, and so on) or a form of an insoluble particle of the carrier, as well as a form of a homogeneous solution. Thus, the olefin polymerization process of the present invention can be carried out in a solution phase, a slurry phase, a bulk phase or a gas phase polymerization reaction. The conditions for each polymerization reaction can be varied according to the state of the catalyst(homogeneous or heterogeneous phase(supported phase)), the polymerization method(solution polymerization, slurry polymerization, gas phase polymerization), target polymer properties or the polymer shape. When the polymerization is carried out in a solution phase or a slurry phase, a solvent or olefin itself may work as a reaction medium. Examples of the solvent include propane, butane, pentane, hexane, octane, decane, dodecane, cyclopentane, methylcyclopentane, cyclohexane, benzene, toluene, xylene, dichloromethane, chloroethane, 1,2-dichloroethane, chlorobenzene, and so on, and, if necessary, mixtures of the solvents in a certain ratio can be used.

The olefin used in the polymerization may be a single olefin or mixtures of two or more olefins. That is, the olefin polymerization catalyst composition of the present invention can be used for a copolymerization of a monomer/a comonomer as well as a homopolymerization of a monomer. Preferable examples of the olefin for the polymerization or the copolymerization include α-olefins, cyclic olefins, dienes, trienes, styrenes, and so on. The α-olefins include an aliphatic olefin of 2 to 12, preferably 2 to 8 carbon atoms, more specifically ethylene, propylene, butene-1, pentene-1, 3-methylbutene-1, hexene-1, 4-methylpentene-1, 3-methylpentene-1, heptene-1, octene-1, decene-1, 4,4-dimethyl-1-pentene, 4,4-diethyl-1-hexene, 3,4-dimethyl-1-hexene, or so on. The α-olefins may be polymerized to form a homo-polymer, an alternating copolymer, a random copolymer or a block copolymer. The copolymerization of the α-olefins includes the copolymerization of ethylene and α-olefin of 3 to 12, preferably 3 to 8 carbon atoms(for example, ethylene and propylene, ethylene and butene-1, ethylene and hexene-1, ethylene and 4-methylpentene-1, ethylene and octene-1, and so on) and the copolymerization of propylene and α-olefin of 4 to 12, preferably 4 to 8 carbon atoms(propylene and butene-1, propylene and 4-methylpentene-1, propylene and 4-methylbutene-1, propylene and hexene-1, propylene and octene-1). In the copolymerization of ethylene or propylene with other α-olefin, the amount of the other α-olefin may be 90 mole% or less with respect to the total monomer, and specifically, in case of a conventional ethylene copolymer, 40 mole% or less, preferably 30 mole% or less, and more preferably 20 mole% or less, and in case of a conventional propylene copolymer, 1 to 90 mole%, preferably 5 to 90 mole%, and more preferably 10 to 70 mole%.

As the cyclic olefins, cyclic olefins of 3 to 24, preferably 3 to 18 carbon numbers can be used. Examples of the cyclic olefins include cyclopentene, cyclobutene, cyclohexene, 3-methylcyclohexene, cyclooctene, tetracyclodecene, octacyclodecene, dicyclopentadiene, norbonene, 5-methyl-2-norbonene, 5-ethyl-2-norbonene, 5-isobutyl-2-norbonene, 5,6-dimethyl-2-norbonene, 5,5,6-trimethyl-2-norbonene, ethylene norbonene, and so on. The cyclic olefins can be copolymerized with the α-olefins, and the amount of the cyclic olefin is 1 to 50 mole%, preferably 2 to 50 mole% with respect to the copolymer. The preferable dienes and trienes include a polyene of 4 to 26 carbon atoms having two or three double bonds. Specific examples of the dienes and the trienes include 1,3-butadiene, 1,4-pentadiene, 1,4-hexadiene, 1,5-hexadiene, 1,9-decadiene, 2-methyl-1,3-butadiene, and so on. Preferable examples of the styrenes include styrene or substituted styrene substituted with an alkyl group, alkoxy group or halogenated alkyl group of 1 to 10 carbon atoms, a halogen group, an amine group, a silyl group, and so on.

In the polymerization or copolymerization of α-olefin according to the present invention, the amount of the metallocene compound represented by Formula 1 is not limited to a certain range. However, the central metal concentration of the metallocene compound of Formula 1 is preferably 10⁻⁸ to 10¹ mol/l, and more preferably 10⁻⁷ to 10⁻² mol/l in a polymerization reaction system. If the amount of the metallocene compound is out of the range, the activity of catalyst may be insufficient, or unnecessarily excessive amount of catalyst may be used. In the polymerization or copolymerization of the present invention, the polymerization temperature can also be varied in wide range according to reactants, reaction conditions, and so on. When performing a solution polymerization, the temperature is generally 0 to 250°C, and more preferably 10 to 200°C. When performing a slurry or a gas phase polymerization, the temperature is generally 0 to 120°C, and more preferably 20 to 100°C. The polymerization pressure is generally atmospheric pressure to 500 kg/cm², and more preferably atmospheric pressure to 50 kg/cm². The polymerization reaction can be carried out in a batch type, a semi-continuous type, or a continuous type reaction. The polymerization can be carried out by two or more steps of different reaction conditions. The molecular weight of the final polymer produced by the olefin polymerization catalyst of the present invention can be controlled by changing the polymerization temperature, or by injecting hydrogen into a reactor. Preferably, the produced olefin has a density in the range of from 0.91 to 0.94 g/cm³.

The olefin polymerization catalyst composition of the present invention can be used not only in a main polymerization of olefin monomers but also in a prepolymerization of olefin monomers. In the prepolymerization process, the olefin polymer or copolymer is produced in the amount of 0.05 to 500g, preferably 0.1 to 300g, and more preferably 0.2 to 100g with respect to 1 g of the catalyst. Examples of the olefin, which is suitable for the prepolymerization, include α -olefins of 2 to 20 carbon atoms, such as ethylene, propylene, 1-butene, 1-pentene, 4-methyl-1-pentene, 1-hexene, 1-octene, 1-decene, 1-dodecene, 1-tetradecene, 3-metllyl-1-butene, 3-methyl-1-pentene, and so on. More suitable olefin for the prepolymerization is the same olefin which is used in a main polymerization.

Hereinafter, the preferable examples are provided for better understanding of the present invention. However, the present invention is not limited to the following examples. In the following examples, the olefin polymerization catalyst was produced with Schlenk method in which air and moisture were completely blocked, and purified and dried nitrogen was used as an inert gas. Solvent was dried with sodium metal under inert nitrogen atmosphere. Melt Index(MI) and HLMI(high load Melt Index) of polymer were measured in accordance with ASTM D1238, and a density of polymer was measured in accordance with ASTM D1505.

### [Example 1]

### A. Preparation of (tetrahydroindenyl)(indenyl)zirconium dichloride

In a 500ml round-bottom flask of nitrogen atmosphere, bis(tetrahydroindenyl)zirconium dichloride 1.065g(2.66mmol), zirconium chloride 0.66g(2.83mmol) and toluene 100ml were added, and reacted at 90°C for 18 hours with stirring. After completion of the reaction, filtrate was gathered by filtrating the reaction product. In a 500ml flask, indenyl lithium 0.66g(5.406mmol) was added, and then the filtrate was added, and the mixture solution was reacted at 90°C for 18 hours with stirring. The solvent was removed by a vacuum suction. And after extraction and filtration by dichloromethane 100ml, the solvent was removed again. 50ml of hexane was added to the reaction product to form a slurry, and the slurry was filtrated, and washed with 500ml of hexane, and dried in vacuum to obtain 1.52g(yield: 72%) of (tetrahydroindenyl)(indenyl)zirconium dichloride. The 1 H NMR(500MHz,CDCl₃) analysis results of the obtained (tetrahydroindenyl)(indenyl)zirconium dichloride were 1.54-1.50 (m, 2, C9H11), 1.79-1.70 (m, 2, C9H11), 2.44-2.38 (m, 2, C9H11), 2.74-2.68 (m, 2, C9H11), 5.32-5.31 (m, 2, C9H11), 6.05-6.34 (m, 1, C9H11), 6.50-6.46 (m, 2, C9H7), 6.86-6.85 (m, 1, C9H7), 7.24-7.22 (m, 2, C9H7), 7.66-7.64 (m, 2, C9H7).

### B. Preparation of catalyst composition

In a 500ml flask of nitrogen atmosphere, (tetrahydroindenyl)(indenyl)zirconium dichloride 92mg and methyl aluminoxane(MAO, Albemarle company, 10% toluene solution) 20ml were mixed, and reacted for 30 minutes to obtain a catalyst solution. 4g of silica calcined at 220 °C was added to the produced catalyst solution, and ultrasonic wave was applied for 1 hour, and the supernatant was discarded. The remaining solid particles were washed with hexane(1 time), and dried in vacuum to obtain a supported catalyst of free-flowable solid powder.

### C. Copolymerization of ethylene/hexene-1

A stainless autoclave reactor of 1L having a jacket for supplying cooling water for controlling a polymerization temperature was purged with isobutane(one time) and ethylene(five times) at about 110°C to remove impurities, and then cooled to 67°C. Isobutane 400ml and triisobutylaluminum 1.0 mmol were added into the washed reactor, and stirred at 75°C. Isobutane 100ml and the obtained supported catalyst 40mg were also added into the reactor, and then, ethylene and 40ml of 1-hexene were added until the partial pressure of ethylene became 130 psig. The polymerization was carried out at 75°C for 4 hours while maintaining the total pressure of the reactor to 290 psig. During the polymerization, the partial pressure of ethylene was maintained to 130 psig, and 1-hexene was added continuously by 10 weight% to the further added ethylene whose flow was measured by Mass Flowmeter. After completion of the polymerization, unreacted 1-hexene and isobutane were discharged, and 395g of free flowable polymer was obtained from the reactor. The polymerization rate during 4 hours of the polymerization reaction was kept steady. The catalytic activity of polymerization was 2,240 g polymer/g·catalyst·hour, and MI((Melt Index) of the obtained polymer was 1.16 g/10min, and the density of the obtained polymer was 0.9277 g/cm³.

### [Example 2]

### A. Preparation of (tetrahydroindenyl)(2-methylindenyl)zirconium dichloride

In a 500ml round-bottom flask of nitrogen atmosphere, bis(tetrahydroindenyl)zirconium dichloride 3.184g(8mmol), zirconium chloride 1.873g(8.4mmol) and toluene 150ml were added, and reacted at 90°C for 24 hours with stirring. After completion of the reaction, filtrate was gathered by filtrating the reaction product. In a 500ml flask, 2-methylindenyl lithium 2.176g(16mmol) was added, and then the filtrate was added, and the mixture solution was reacted at 90°C for 24 hours with stirring. The solvent was removed by a vacuum suction. And after extraction and filtration by dichloromethane 100ml, the solvent was removed again. 50ml of hexane was added to the reaction product to form a slurry, and the slurry was filtrated, and washed with 500ml of hexane, and dried in vacuum to obtain 3.45g(yield: 52%) of (tetrahydroindenyl)(2-methylindenyl)zirconium dichloride. The 1 H NMR(500MHz,CDCl₃) analysis results of the obtained (tetrahydroindenyl)(2-methylindenyl)zirconium dichloride were 1.49-1.42 (m, 2, C9H11), 1.75-1.68 (m, 2, C9H11), 2.28 (s, 3, C10H9), 2.37-2.33 (m, 2, C9H11), 2.69-2.64 (m, 2, C9H11), 5.09-5.08 (m, 2, C10H11), 5.80-5.79 (m, 1, C10H11), 6.236 (s, 2, C10H9), 7.13-7.10 (m, 2, C10H9), 7.55-7.53 (m, 2, C10H9).

### B. Preparation of catalyst composition

In a 500ml flask of nitrogen atmosphere, (tetrahydroindenyl)(2-methylindenyl)zirconium dichloride 95mg and methyl aluminoxane(MAO, Albemarle company, 10% toluene solution) 20ml were mixed, and reacted for 30 minutes to obtain a catalyst solution. 4g of silica calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst of free-flowable solid powder.

### C. Copolymerization of ethylene/hexene-1

Except for using the catalyst 61 mg prepared in the above step, the polymerization was carried out for 4 hours in accordance with the polymerization method of Example 1 to obtain the polymer 317g. The polymerization rate during 4 hours of the polymerization reaction was kept steady. The catalytic activity of polymerization was 1,650 g polymer/g·catalyst·hour, and MI((Melt Index) of the obtained polymer was 0.64 g/10min, and the density of the obtained polymer was 0.9287 g/cm³.

### [Example 3]

### A. Preparation of (tetrahydroindenyl)(1-n-butylindenvl)zirconium dichloride

In a 500ml round-bottom flask of nitrogen atmosphere, bis(tetrahydroindenyl)zirconium dichloride 3.184g(8.0mmol), zirconium chloride 1.873g(8.4mmol) and toluene 150ml were added, and reacted at 90°C for 24 hours with stirring. After completion of the reaction, filtrate was gathered by filtrating the reaction product. In a 500ml flask, 1-n-butylindenyl lithium 2.85g(16mmol) was added, and then the filtrate was added, and the mixture solution was reacted at 90°C for 24 hours with stirring. The solvent was removed by a vacuum suction. And after extraction and filtration by dichloromethane 100ml, the solvent was removed again. 50ml of hexane was added to the reaction product to form a slurry, and the slurry was filtrated, and washed with 500ml of hexane, and dried in vacuum to obtain 3.13g(yield: 43%) of (tetrahydroindenyl)(1-n-butylindenyl)zirconium dichloride. The 1H NMR(500MHz,CDCl₃) analysis results of the obtained (tetrahydroindenyl)(1-n-butylindenyl)zirconium dichloride were 0.89-0.91 (m, 3, C11H12), 1.466-1.493 (reactant, m), 1.68-1.72 (reactant, m), 2.325 (m, 1, C9H11), 2.415 (m, 1, C9H11), 2.584 (m, 1, C9H11), 2.703 (m, 1, C9H11), 2.97-2.98 (m, 2, C11H12), 4.931 (m, 2, C9H11), 5.50 (m, 1, C9H11), 6.0 (m, 1, C11H12), 6.328 (m, 1, C11H12), 6.592 (m, 1, C11H12), 7.15-7.19(m, 2, C11H12), 7.53-7.56 (m, 2, C11H12).

### B. Preparation of catalyst composition

In a 500ml flask of nitrogen atmosphere, (tetrahydroindenyl)(1-n-butylindenyl)zirconium dichloride 236mg and methyl aluminoxane(MAO, Albemarle company, 10% toluene solution) 50ml were mixed, and reacted for 30 minutes to obtain a catalyst solution. 10g of silica calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst of free-flowable solid powder.

### C. Copolymerization of ethylene/hexene-1

Except for using the catalyst 61mg prepared in the above step, the polymerization was carried out for 3 hours in accordance with the polymerization method of Example 1 to obtain the polymer 213g. The polymerization rate during 3 hours of the polymerization reaction was kept steady. The catalytic activity of polymerization was 1,170 g polymer/g·catalyst·hour, and MI((Melt Index) of the obtained polymer was 0.22 g/10min, and the density of the obtained polymer was 0.9305 g/cm³.

### [Example 4]

### A. Preparation of (tetrahydroindenyl)(1-ethylindenyl)zirconium dichloride

In a 500ml round-bottom flask of nitrogen atmosphere, bis(tetrahydroindenyl)zirconium dichloride 3.184g(8.0mmol), zirconium chloride 1.873g(8.4mmol) and toluene 150ml were added, and reacted at 90°C for 24 hours with stirring. After completion of the reaction, filtrate was gathered by filtrating the reaction product. In a 500ml flask, 1-ethylindenyl lithium 2.4g(16mmol) was added, and then the filtrate was added, and the mixture solution was reacted at 90°C for 24 hours with stirring. The solvent was removed by a vacuum suction. And after extraction and filtration by dichloromethane 100ml, the solvent was removed again. 50ml of hexane was added to the reaction product to form a slurry, and the slurry was filtrated, and washed with 500ml of hexane, and dried in vacuum to obtain 3.58g(yield: 53%) of (tetrahydroindenyl)(1-ethylindenyl)zirconium dichloride. The 1 H NMR(500MHz,CDCl₃) analysis results of the obtained (tetrahydroindenyl)(1-ethylindenyl)zirconium dichloride were 1.248-1.255 (m, 3, C11H12), 1.466-1.493 (reactant, m), 1.68-1.72 (reactant, m), 2.325 (m, 1, C9H11), 2.415 (m, 1, C9H11), 2.584 (m, 1, C9H11), 2.703 (m, 1, C9H11), 2.97-2.98 (m, 2, C11H12), 4.931 (m, 2, C9H11), 5.50 (m, 1, C9H11), 6.0 (m, 1, C11H12), 6.328 (m, 1, C11H12), 6.592 (m, 1, C11H12), 7.15-7.19(m, 2, C11H12), 7.53-7.56 (m, 2, C11H12).

### B. Preparation of catalyst composition

In a 500ml flask of nitrogen atmosphere, (tetrahydroindenyl)(1-ethylindenyl)zirconium dichloride 130mg and methyl aluminoxane(MAO, Albemarle company, 10% toluene solution) 25ml were mixed, and reacted for 30 minutes to obtain a catalyst solution. 5g of silica calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst of free-flowable solid powder.

### C. Copolymerization of ethylene/hexene-1

Except for using the catalyst 59 mg prepared in the above step, the polymerization was carried out for 4 hours in accordance with the polymerization method of Example 1 to obtain the polymer of 190g. The polymerization rate during 4 hours of the polymerization reaction was slightly decayed. The catalytic activity of polymerization was 790 g polymer/g·catalyst·hour, and MI((Melt Index) of the obtained polymer was 0.18 g/10min, and the density of the obtained polymer was 0.9309 g/cm³.

### [Example 5]

### A. Preparation of (tetrahydroindenyl)(2-phenylindenyl)zirconium dichloride

In a 500ml round-bottom flask of nitrogen atmosphere, bis(tetrahydroindenyl)zirconium dichloride 1.0g(2.5mmol), zirconium chloride 0.61g(2.75mmol) and toluene 150ml were added, and reacted at 90°C for 24 hours with stirring. After completion of the reaction, filtrate was gathered by filtrating the reaction product. In a 500ml flask, 2-phenylindenyl lithium 0.991g(5.0mmol) was added, and then the filtrate was added, and the mixture solution was reacted at 90°C for 24 hours with stirring. The solvent was removed by a vacuum suction. And after extraction and filtration by dichloromethane 100ml, the solvent was removed again. 50ml of hexane was added to the reaction product to form a slurry, and the slurry was filtrated, and washed with 500ml of hexane, and dried in vacuum to obtain 0.9g(yield: 39%) of (tetrahydroindenyl)(2-phenylindenyl)zirconium dichloride. The 1H NMR(500MHz,CDCl₃) analysis results of the obtained (tetrahydroindenyl)(2-phenylindenyl)zirconium dichloride were 1.47-1.49 (m, 2, C9H11), 1.68-1.70 (m, 2, C9H11), 2.41-2.49 (m, 2, C9H11), 2.68-2.72 (m, 2, C9H11), 5.29-5.31 (d, 2, C9H11), 5.80-5.84 (m, 1, C9H11). 7.20-7.25 (m, 2, C15H11), 7.30-7.33 (m, 1, C15H11), 7.4-7.42 (m, 2, C15H9), 7.58-7.61 (m, 2, C15H9), 7.67-7.70 (m, 2, C15H9).

### B. Preparation of catalyst composition

In a 500ml flask of nitrogen atmosphere, (tetrahydroindenyl)(2-phenylindenyl)zirconium dichloride 124mg and methyl aluminoxane(MAO, Albemarle company, 10% toluene solution) 25ml were mixed, and reacted for 30 minutes to obtain a catalyst solution. 5g of silica calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst of free-flowable solid powder.

### C. Copolymerization of ethylene/hexene-1

Except for using the catalyst 60mg prepared in the above step, the polymerization was carried out for 3 hours in accordance with the polymerization method of Example 1 to obtain the polymer 70 g. The polymerization rate during 3 hours of the polymerization reaction was kept steady. The catalytic activity of polymerization was 400 g polymer/g·catalyst·hour, and MI((Melt Index) of the obtained polymer was 0.11 g/10min, and the density of the obtained polymer was 0.9257 g/cm³.

### [Comparative Example]

### A. Preparation of catalyst composition

In a 500ml flask of nitrogen atmosphere, bis(tetrahydroindenyl)zirconium chloride 84mg and methyl aluminoxane(MAO, Albemarle company, 10% toluene solution) 20ml were mixed, and stirred for 30 minutes to obtain a catalyst solution. 4g of silica calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst of free-flowable solid powder.

### B. Copolymerization of ethylene/hexene-1

Except for using the catalyst 105mg prepared in the above step, the polymerization was carried out for 1 hour in accordance with the polymerization method of Example 1 to obtain the polymer 123g. During 1 hour for the polymerization, the polymerization rate was rapidly decayed while initial catalytic activity was high. The catalytic activity of polymerization was 1,170 g polymer/g·catalyst·hour, and MI((Melt Index) of the obtained polymer was 0.11 g/10min, and the density of the obtained polymer was 0.9226 g/cm³.

## Claims

1. A metallocene compound represented by the following Formula 1,
[Formula 1] (4Hlnd)(Cp')MX₂
in Formula 1, 4HInd is a group having tetrahydroindenyl nucleus , Cp' is a group having cyclopentadienyl nucleus, and 4Hlnd and Cp' are unsubstituted or substituted by one or more substituents, and the substituents are same or different from each other, and are radicals selected from the group consisting of an alkyl, alkoxy, alkylsilyl, alkylsiloxy, alkylamino or haloalkyl group of 1 to 20 carbon atoms, a cycloalkyl group of 3 to 20 carbon atoms, an aryl, arylalkyl, arylsilyl, alkylaryl or aryloxy group of 6 to 20 carbon atoms, a dialkylamino group of 2 to 20 carbon atoms, a halogen atom, and an amino group, and M is a Group IV, V or VI transition metal of the Periodic Table, and X is same or different from each other, and is radical selected from the group consisting of a halogen atom, an alkyl or alkoxy group of 1 to 20 carbon atoms, an alkenyl group of 2 to 20 carbon atoms, aryl, alkylaryl, arylalkyl, aryloxy group of 6 to 20 carbon atoms.

2. The metallocene compound according to claim 1, wherein 4HInd is a group having 4,5,6,7-tetrahydroindenyl nucleus, and Cp' is a group having cyclopentadienyl nucleus selected from the group consisting of cyclopentadienyl group, indenyl group, fluorenyl group, azulenyl group.

3. The metallocene compound according to claim 1, wherein M is a transition metal selected from the group consisting of titanium, zirconium and hafnium, and X is a halogen atom selected from the group consisting of fluorine, chlorine, bromine, and iodine.

4. A metallocene catalyst composition comprising:
a metallocene compound represented by the following Formula 1,
[Formula 1] (4Hlnd)(Cp')MX₂
in Formula 1, 4HInd is a group having tetrahydroindenyl nucleus, Cp' is a group having cyclopentadienyl nucleus, and 4HInd and Cp' are unsubstituted or substituted by one or more substituents, and the substituents are same or different from each other, and are radicals selected from the group consisting of an alkyl, alkoxy, alkylsilyl, alkylsiloxy, alkylamino or haloalkyl group of 1 to 20 carbon atoms, a cycloalkyl group of 3 to 20 carbon atoms, an aryl, arylalkyl, arylsilyi, alkylaryl or aryloxy group of 6 to 20 carbon atoms, a dialkylamino group of 2 to 20 carbon atoms, a halogen atom, and an amino group, and M is a Group IV, V or VI transition metal of the Periodic Table, and X is same or different from each other, and is radical selected from the group consisting of a halogen atom, an alkyl or alkoxy group of 1 to 20 carbon atoms, an alkenyl group of 2 to 20 carbon atoms, aryl, alkylaryl, arylalkyl, aryloxy group of 6 to 20 carbon atoms; and
an activator which is reacted with the metallocene compound so that the metallocene compound has catalytic activation.

5. The metallocene catalyst composition according to claim 4, wherein the activator is selected from the group consisting of an alkyl aluminoxane, an organic aluminum compound, a bulky aromatic fluoride compound, a modified clay, and a Lewis acid inorganic oxide.

6. The metallocene catalyst composition according to claim 5, wherein the activator is a hydrocarbyl aluminoxane represented by Formulas 3 or 4 which is an oligomer having a linear or cyclic structure, 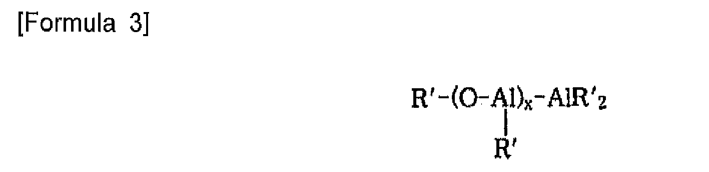 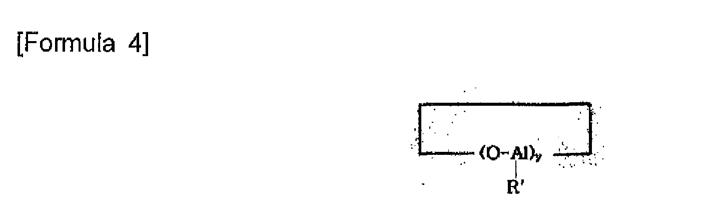 in Formulas 3 and 4, R' is independently linear or a branched alkyl radicals of 1 to 10 carbon atoms, x is an integer of 1 to 50, and y is an integer of 3 to 50.

7. The metallocene catalyst composition according to claim 6, wherein the amount of the aluminum of the aluminoxane is 1 to 100,000 moles with respect to 1 mole of the metallocene compound represented by Formula 1.

8. The metallocene catalyst composition according to claim 5, wherein the bulky aromatic fluoride compound is selected from the group consisting of trimethylammonium tetrakis(pentafluorophenyl)borate, triethylammonium tetrakis(pentafluorophenyl)borate, tripropylammonium tetrakis(pentafluorophenyl)borate, tributylammonium tetrakis(pentafluorophenyl)borate, anilinium tetrakis(pentafluorophenyl)borate, pyridinium tetrakis(pentafluorophenyl)borate, Ferrocenium tetrakis(pentafluorophenyl)borate, silver tetrakis(pentafluorophenyl)borate, tris(pentafluorophenyl)borane, tri(3,4,5-trifluorophenyl)borane, and mixtures thereof, and the modified clay is selected from the group consisting of N,N-dimethylanilinium montmorillonite, N,N-dimethylanilinium hectorite, and mixtures thereof.

9. The metallocene catalyst composition according to claim 4, wherein the metallocene catalyst composition further comprises an organic or inorganic carrier on which the metallocene compound and activator are supported.

10. An olefin polymerization method including a step of polymerizing at least one olefin in the presence of a metallocene compound represented by Formula 1,
[Formula 1] (4Hlnd)(Cp')MX₂
in Formula 1, 4Hlnd is a group having tetrahydroindenyl nucleus, Cp' is a group having cyclopentadienyl nucleus, and 4HInd and Cp' are unsubstituted or substituted by one or more substituents, and the substituents are same or different from each other, and are radicals selected from the group consisting of an alkyl, alkoxy, alkylsilyl, alkylsiloxy, alkylamino or haloalkyl group of 1 to 20 carbon atoms, a cycloalkyl group of 3 to 20 carbon atoms, an aryl, arylalkyl, arylsilyl, alkylaryl or aryloxy group of 6 to 20 carbon atoms, a dialkylamino group of 2 to 20 carbon atoms, a halogen atom, and an amino group, and M is a Group IV, V or VI transition metal of the Periodic Table, and X is same or different from each other, and is radical selected from the group consisting of a halogen atom, an alkyl or alkoxy group of 1 to 20 carbon atoms, an alkenyl group of 2 to 20 carbon atoms, aryl, alkylaryl, arylalkyl, aryloxy group of 6 to 20 carbon atoms.

11. The olefin polymerization method according to claim 10, wherein the olefin is an aliphatic α-olefins of 2 to 12 carbon atoms.

12. The olefin polymerization method according to claim 10, wherein the polymerization reaction is a solution phase, a slurry phase, a bulk phase or a gas phase polymerization reaction.

13. The olefin polymerization method according to claim 10, wherein the olefin has a density in the range of from 0.91 to 0.94 g/cm³.
